(19) Europäisches Patentamt
European Patent Office
Office européen des brevets

(11) **EP 4 032 921 B1**

(12) **EUROPEAN PATENT SPECIFICATION**

(45) Date of publication and mention of the grant of the patent:
**27.08.2025 Bulletin 2025/35**

(21) Application number: **20865199.2**

(22) Date of filing: **18.09.2020**

(51) International Patent Classification (IPC):
***C08F 236/04*** *(2006.01)* ***C08F 8/20*** *(2006.01)*
***C08F 4/48*** *(2006.01)* ***C08C 19/22*** *(2006.01)*
***C08F 236/06*** *(2006.01)* ***C08C 19/25*** *(2006.01)*
***C08F 136/06*** *(2006.01)* ***C08L 15/00*** *(2006.01)*

(52) Cooperative Patent Classification (CPC):
(C-Sets available)
**C08C 19/22; C08C 19/25; C08F 136/06; C08F 236/06; C08L 15/00** (Cont.)

(86) International application number:
**PCT/KR2020/012661**

(87) International publication number:
**WO 2021/054785 (25.03.2021 Gazette 2021/12)**

(54) **METHOD FOR PREPARING MODIFIED CONJUGATED DIENE-BASED POLYMER**

VERFAHREN ZUR HERSTELLUNG EINES MODIFIZIERTEN KONJUGIERTEN DIEN-BASIERTEN POLYMERS

MÉTHODE DE PRÉPARATION D’UN POLYMÈRE MODIFIÉ À BASE DE DIÈNE CONJUGUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2019 KR 20190115575**

(43) Date of publication of application:
**27.07.2022 Bulletin 2022/30**

(73) Proprietor: **LG Chem, Ltd.**
**Seoul 07336 (KR)**

(72) Inventors:
- **BAE, Hyo Jin**
**Daejeon 34122 (KR)**
- **KIM, Su Hwa**
**Daejeon 34122 (KR)**
- **OH, Kyoung Hwan**
**Daejeon 34122 (KR)**
- **LEE, Tae Chul**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 1 803 740** **EP-A1- 3 409 714**
**EP-A1- 3 409 717** **EP-A1- 3 409 718**
**EP-A1- 3 674 330** **EP-A2- 1 099 711**
**EP-A2- 3 689 960** **WO-A1-2019/078459**
**WO-A1-2019/083173** **KR-A- 20070 119 092**
**KR-A- 20080 063 191** **KR-A- 20120 052 237**
**KR-A- 20190 038 344** **US-A1- 2009 099 325**
**US-A1- 2017 002 112** **US-A1- 2018 030 173**
**US-B1- 6 437 205** **US-B2- 10 316 121**
**US-B2- 9 353 205**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(52) Cooperative Patent Classification (CPC): (Cont.)

C-Sets
**C08F 136/06, C08F 4/545;**
**C08L 15/00, C08L 91/00, C08K 3/04, C08K 5/3437, C08K 3/22, C08K 5/47, C08K 5/31**

## Description

## TECHNICAL FIELD

### [Technical Field]

The present invention relates to a method for preparing a modified diene-based polymer with a high modification ratio, which has excellent physical properties such as tensile properties and viscoelasticity properties.

## BACKGROUND ART

Recently, according to the growing attention on saving energy and environmental issues, the decrease of the fuel consumption ratio of cars is required. As a method for accomplishing the requirement, a method for decreasing the heating properties of tires using an inorganic filler such as silica and carbon black in a rubber composition for forming tires has been suggested. However, the dispersion of the inorganic filler in the rubber composition is not favorable, and defects of degrading overall physical properties of the rubber composition including abrasion resistance, crack resistance or processability arise.

In order to solve such problems, a method for modifying the polymerization active moiety of a conjugated diene-based polymer which is obtained by anionic polymerization using an organolithium with a functional group which is capable of interacting with an inorganic filler, has been developed as a method for increasing the dispersibility of an inorganic filler such as silica and carbon black in a rubber composition. Particularly, a method of modifying the polymerization active terminal of a conjugated diene-based polymer with a tin-based compound, a method of introducing an amino group, or a method of modifying with an alkoxysilane derivative has been suggested.

As another method, a method for improving processability and physical properties by modifying a living active terminal using a specific coupling agent or a modifier in a living polymer obtained by coordination polymerization using a catalyst including a lanthanide rare earth element compound has been developed.

For example, disclosed is a method of introducing a branch structure by adding sulfur chloride after preparing 1,4-cis polybutadiene using a catalyst composed of the combination of a neodymium carboxylate compound, an alkylaluminum compound and a halogen-containing compound in a non-polar solvent and finishing the reaction using a reaction quenching agent and an antioxidant.

However, if the modified conjugated diene-based polymer is prepared by the above-described method and used in a rubber composition, the improving effects of physical properties of the rubber composition such as abrasion resistance and processability are insignificant. Therefore, a method of introducing a large number of functional groups derived from a modifier by improving a modification ratio during preparing a modified conjugated diene-based polymer and improving the compounding properties of the rubber composition such as tensile properties and viscoelasticity properties is still required.

[Prior Art Document]

[Patent Document]

Korean Laid-open Patent No. 2017-0077614

US 2017/002112 A1, US 2009/099325 A1, EP 3 409 718 A1, KR 20190038344 A, US 10,316,121 B2, EP 1 803 740 A1, EP 3 409 714 A1, EP 3 409 717 A1, WO 2019/078459 A1, EP 1 099 711 A2, US 2018/030173 A1, KR 20070119092 A and KR 20080063191 A disclose a method for preparing a modified conjugated diene-based polymer, the method comprising: polymerizing a conjugated diene-based monomer in the presence of a catalyst composition comprising a neodymium compound, a first alkylating agent, a second alkylating agent and a halide in a hydrocarbon solvent to prepare an active polymer; and reacting the active polymer with a modifier, wherein a molar ratio of the neodymium compound and the second alkylating agent is 1:20 to 1:35, and the polymerizing is performed at a temperature of 30 to 65°C.

## DISCLOSURE OF THE INVENTION

## TECHNICAL PROBLEM

An object of the present invention is to provide a method for preparing a modified conjugated diene-based polymer, which may prepare a modified conjugated diene-based polymer having excellent tensile properties and viscoelasticity properties with a high modification ratio.

## TECHNICAL SOLUTION

To solve the above-mentioned problems, the present invention provides a method for preparing a modified conjugated diene-based polymer, including: polymerizing a conjugated diene-based monomer in the presence of a catalyst composition including a neodymium compound, a first alkylating agent, a second alkylating agent and a halide in a hydrocarbon solvent to prepare an active polymer; and reacting or coupling the active polymer with a modifier, wherein a molar ratio of the neodymium compound and the second alkylating agent is 1 : 20 to 1 : 35, and the polymerizing is performed at a temperature of 30 to 65°C, wherein the modifier is ethyl 1-(trimethylsilyl)piperidine-4-carboxylate, wherein the first alkylating agent is aluminoxane, and
wherein the second alkylating agent is dihydrocarbylaluminum hydride or hydrocarbylaluminum dihydride.

## ADVANTAGEOUS EFFECTS

A conjugated diene-based polymer may be modified at a high modification ratio by using the preparation method of the present invention, and the modified conjugated diene-based polymer thus prepared is used in a rubber composition to show effects of excellent processability, tensile properties and viscoelasticity properties.

## MODE FOR CARRYING OUT THE INVENTION

Hereinafter, the present invention will be described in more detail to assist the understanding of the present invention.
It will be understood that words or terms used in the description and claims of the present invention shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.
Hereinafter, the present invention will be explained in detail.
The method for preparing a modified conjugated diene-based polymer of the present invention is characterized in including: polymerizing a conjugated diene-based monomer in the presence of a catalyst composition including a neodymium compound, a first alkylating agent, a second alkylating agent and a halide in a hydrocarbon solvent to prepare an active polymer (step 1); and reacting or coupling the active polymer with a modifier (step 2), wherein a molar ratio of the neodymium compound and the second alkylating agent is 1 : 20 to 1 : 35, and the polymerizing is performed at a temperature of 30 to 65°C, wherein the modifier is ethyl 1-(trimethylsilyl)piperidine-4-carboxylate, wherein the first alkylating agent is aluminoxane, and
wherein the second alkylating agent is dihydrocarbylaluminum hydride or hydrocarbylaluminum dihydride.

### Step 1

Step 1 is a step of polymerizing a conjugated diene-based monomer in the presence of a catalyst composition including a neodymium compound, a first alkylating agent, a second alkylating agent and a halide in a hydrocarbon solvent to prepare an active polymer, wherein the active polymer may mean a conjugated diene-based polymer including an organometal part.
The organometal part may be an activated organometal part at the terminal of a conjugated diene-based polymer (activated organometal part at the terminal of a molecular chain), an activated organometal part in a main chain, or an activated organometal part in a side chain (branched chain), and among them, in case of obtaining the activated organometal part by anionic polymerization or coordination anionic polymerization, the organometal part may represent an activated organometal part at the terminal.
The molar ratio of the neodymium compound and the second alkylating agent contained in the catalyst composition is 1 : 20 to 1 : 35. Particularly, the second alkylating agent may be 20 mol or more and 35 mol or less, 30 mol or less based on 1 mol of the neodymium compound.
In the present invention, the neodymium compound and the second alkylating agent are included in the aforementioned molar ratio and used, and a functional group derived from a modifier may be efficiently bonded to the terminal of the conjugated diene-based polymer at a modification step, and a modification ratio may increase. In addition, if the modified conjugated diene-based polymer thus prepared is used in a rubber composition, excellent processability and excellent compounding properties such as tensile properties and viscoelasticity properties may be shown.
If the second alkylating agent is less than 20 mol based on 1 mol of the neodymium compound, the molecular weight of the conjugated diene-based polymer may be too high, and in order to control the molecular weight, there may be defects in that an excessive amount of the catalyst composition is required. In addition, the preparation efficiency of the

catalyst composition may be reduced, and the quality deterioration of the catalyst composition thus prepared may arise, and at last, the reduction of a modification ratio and the deterioration of the quality of the rubber composition may be induced. In addition, if the second alkylating agent is greater than 35 mol based on 1 mol of the neodymium compound, the molecular weight of the conjugated diene-based polymer may be too low, and in order to control the molecular weight, the amount of the catalyst composition is required to decrease, and in this case, there may be defects in that polymerization reaction itself is insufficiently performed, and a polymerization conversion ratio is markedly reduced. Also, the living properties of the active polymer may be reduced, and the modification ratio may decrease, and accordingly, the deterioration of quality including compounding properties of the rubber composition may arise.

In addition, if the molar ratio of the neodymium compound and the second alkylating agent deviates from the above-described range, the preparation efficiency of the catalyst composition may be reduced, the quality deterioration of the catalyst composition thus prepared may arise, and the deterioration of the physical properties of the modified conjugated diene-based polymer and the rubber composition using the same may be induced.

As described above, in the present invention, by using the second alkylating agent in an amount of 20 to 35 mol based on 1 mol of the neodymium compound, the living properties of the active polymer was improved, the functional group derived from a modifier could be efficiently bonded to the terminal of a polymer at a modification step to increase a modification ratio, and a modified conjugated diene-based polymer showing excellent physical properties was prepared.

In the catalyst composition, the molar ratio of the neodymium compound, the first alkylating agent, the second alkylating agent and the halide may be 1 : (50 to 200) : (20 to 35) : (2 to 5).

More particularly, based on 1 mol of the neodymium compound, the first alkylating agent may be 50 mol or more, 60 mol or more, 80 mol or more, 90 mol or more, and 200 mol or less, 150 mol or less, 120 mol or less, 110 mol or less. In addition, based on 1 mol of the neodymium compound, the second alkylating agent may be 20 mol or more, and 35 mol or less. In addition, based on 1 mol of the neodymium compound, the halide may be 2.0 mol or more, 2.1 mol or more, 2.2 mol or more, 2.3 mol or more, and 5.0 mol or less, 3.0 mol or less, 2.5 mol or less.

If the molar ratios of the neodymium compound, the first alkylating agent, the second alkylating agent and the halide deviate from the ranges, the preparation efficiency of the catalyst composition may be reduced, and the quality deterioration of the catalyst composition thus prepared may arise. At last, the deterioration of the physical properties of the modified conjugated diene-based polymer and the rubber composition using the same may be induced.

Based on 100 g of the conjugated diene-based monomer used for polymerization, the neodymium compound may be 0.01 to 0.50 mmol, particularly, 0.01 mmol or more, 0.02 mmol or more, 0.04 mmol or more, 0.05 mmol or more, 0.07 mmol or more, 0.08 mmol or more, and 0.50 mmol or less, 0.30 mmol or less, less than 0.20 mmol, 0.19 mmol or less, 0.18 mmol or less, 0.16 mmol or less. For example, based on 100 g of the conjugated diene-based monomer, the neodymium compound may be greater than 0.04 mmol and less than 0.20 mmol, 0.05 to 0.19 mmol, 0.07 to 0.18 mmol, 0.08 to 0.16 mmol.

By using the neodymium compound in the aforementioned amount, there are effects in that appropriate concentration is achieved, excellent catalyst activity may be shown, economic feasibility may be secured, and a separate demineralization process is unnecessary.

Also, the catalyst composition of the present invention may satisfy the above-described amount range of the neodymium compound based on 100 g of the conjugated diene-based monomer, and the molar ratio of the neodymium compound, the first alkylating agent, the second alkylating agent and the halide may be satisfied at the same time.

In addition, the preparation method of the present invention may further include a step of mixing the neodymium compound, the first alkylating agent, the second alkylating agent and the halide at -30 to -20°C and standing the mixture at -30 to -20°C for 24 to 36 hours to prepare the catalyst composition, prior to preparing the active polymer.

That is, the catalyst composition may be prepared by injecting the neodymium compound, the first alkylating agent, the second alkylating agent, the halide and selectively the conjugated diene-based monomer in order and then, mixing. Particularly, the catalyst composition may be prepared by injecting the neodymium compound, the first alkylating agent, the second alkylating agent, the halide and selectively the conjugated diene-based monomer in order and then, mixing in a hydrocarbon-based solvent. In this case, the hydrocarbon-based solvent may be a nonpolar solvent which has no reactivity with the constituent components of the catalyst composition. Particularly, the hydrocarbon-based solvent may use one or more selected from the group consisting of an aliphatic hydrocarbon-based solvent such as pentane, hexane, isopentane, heptane, octane and isooctane; a cycloaliphatic hydrocarbon-based solvent such as cyclopentane, methylcyclopentane, cyclohexane, methylcyclohexane and ethylcyclohexane; and an aromatic hydrocarbon-based solvent such as benzene, toluene, ethylbenzene and xylene. As a particular example, the hydrocarbon-based solvent may be the aliphatic hydrocarbon-based solvent such as hexane.

In this case, in order to promote the generation of a catalyst active species, the mixing process may be performed at -30 to -20°C, and after mixing, the mixture thus obtained may be stood for 24 to 36 hours.

Through preparing with the above-described composition by the above-described method, the catalyst composition may be applied to the preparation method of the present invention to efficiently prepare the modified conjugated diene-based polymer showing excellent physical properties.

In the present invention, the conjugated diene-based monomer for preparing the active polymer is not specifically limited only if used for the preparation of a common conjugated diene-based polymer. The conjugated diene-based monomer may particularly be 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene or 2,4-hexadiene, and any one among them, or mixtures of two or more thereof may be used. More particularly, the conjugated diene-based monomer may be 1,3-butadiene.

In addition, considering the physical properties of the active polymer finally prepared in the polymerization reaction, other monomers which are copolymerizable with the conjugated diene-based monomer may be used, and the other monomers may particularly be an aromatic vinyl monomer such as styrene, p-methylstyrene, $\alpha$-methylstyrene, 1-vinylnapththalene, 3-vinyltoluene, ethylvinylbenzene, divinylbenzene, 4-cyclohexylstyrene and 2,4,6-trimethylstyrene, and any one among them or mixtures of two or more thereof may be used. The other monomers may be used in an amount of 20 wt% or less with respect to the total weight of the monomer used for polymerization reaction.

In this case, the total amount of the conjugated diene-based monomer used for preparing the conjugated diene-based polymer is not dissolved in a nonpolar solvent, but a portion of the total amount used is dissolved in a polymerization solvent and polymerized, and the conjugated diene-based monomer may be injected in installments once or more, particularly, twice or more, more particularly, twice to four times according to the polymerization conversion ratio.

The hydrocarbon solvent used in step 1 may be a nonpolar solvent. Particularly, the hydrocarbon solvent may use one or more selected from the group consisting of an aliphatic hydrocarbon solvent such as pentane, hexane, isopentane, heptane, octane and isooctane; a cycloaliphatic hydrocarbon solvent such as cyclopentane, methylcyclopentane, cyclohexane, methylcyclohexane and ethylcyclohexane; and an aromatic hydrocarbon solvent such as benzene, toluene, ethylbenzene and xylene. As a particular example, the hydrocarbon solvent may be the aliphatic hydrocarbon solvent such as hexane.

With the polymerization solvent, the concentration of the monomer is not specifically limited, but may be 3 to 80 wt%, more particularly, 10 to 30 wt%.

The polymerization in step 1 may be performed by radical polymerization, and may be performed by various methods such as bulk polymerization, solution polymerization, suspension polymerization, and emulsion polymerization, or may be performed by a batch method, a continuous method or a semi-continuous method.

Particularly, if prepared by the solution polymerization, the active polymer according to an embodiment of the present invention may be obtained by injecting a conjugated diene-based monomer to the catalyst composition and reacting in a polymerization solvent.

In addition, the polymerization may be a polymerization with heating, an isothermal polymerization, or a polymerization at a constant temperature (adiabatic polymerization).

Here, the constant temperature polymerization denotes a polymerization method including a step of performing polymerization not by optionally applying heat but with its own reaction heat after the catalyst composition is injected, the polymerization with heating denotes a polymerization method in which the temperature is elevated by optionally applying heat after the catalyst composition is injected, and the isothermal polymerization denotes a polymerization method in which the temperature of the polymer is constantly maintained by taking away heat or applying heat after the catalyst composition is injected.

The polymerization in step 1 may be performed at a temperature of 30°C to 65°C, particularly at a temperature of 30°C or more, 40°C or more, 45°C or more, 50°C or more, and 65°C or less, 60°C or less, 55°C or less.

In the present invention, the conjugated diene-based polymer may be efficiently prepared under moderate conditions by performed the polymerization reaction at a low temperature of less than 70°C, and the present invention is characterized in preparing a conjugated diene-based polymer by sufficiently controlling the polymerization reaction while not reducing the rate and efficiency of the polymerization reaction.

Particularly, the living properties of the active polymer may be improved by reducing the polymerization temperature to 30 to 65°C as described above, and through this, a functional group derived from a modifier may be efficiently bonded to the terminal of the active polymer at a modification step to improve a modification ratio. In addition, by controlling the polymerization temperature in the above-described range, a modified conjugated diene-based polymer having excellent linearity in contrast to a higher polymerization temperature may be prepared.

Through such temperature control, though using the same catalyst composition and conjugated diene-based monomer as reaction materials, a modified conjugated diene-based polymer having even better tensile properties and viscoelasticity properties, and excellent affinity with a filler may be prepared.

If the polymerization temperature is greater than 65°C, the living properties of the active polymer decreases, and a modification ratio may be reduced, and a modified conjugated diene-based polymer with deteriorated linearity may be prepared. In conclusion, the improvement of the improving effects of the affinity of the modified conjugated diene-based polymer with a filler becomes difficult, and thus, the deterioration of the compounding properties of a rubber composition may be induced. In addition, if the polymerization temperature is less than 30°C, the polymerization reaction rate or efficiency may be markedly reduced, and the preparation of the conjugated diene-based polymer may become difficult.

As described above, since the neodymium compound and the second alkylating agent are mixed in a molar ratio of 1 : 20 to 1 : 35, though using a catalyst composition using a small amount of the second alkylating agent, the living properties of the active polymer may be improved and the modification ratio may be increased, and furthermore, by controlling the polymerization temperature in the above-described range, such effects may be maximized.

In addition, the polymerization may be performed until the polymerization conversion ratio reaches 95% or more, 99% or more, at most 100%, in the temperature range for 15 minutes or more, 30 minutes or more, and 3 hours or less, 2 hours or less, for example, for 1 hour.

As described above, the catalyst composition of the present invention may include (a) a neodymium compound, (b) a first alkylating agent, (c) a second alkylating agent and (d) a halide, and may further include (e) a conjugated diene-based monomer.

(a) Neodymium compound

The neodymium compound is activated by the first alkylating agent and the second alkylating agent, and then, forms a catalyst active species for polymerizing the conjugated diene-based monomer.

The neodymium compound may include carboxylates thereof (e.g., neodymium acetate, neodymium acrylate, neodymium methacrylate, neodymium gluconate, neodymium citrate, neodymium fumarate, neodymium lactate, neodymium maleate, neodymium oxalate, neodymium 2-ethylhexanoate, neodymium neodecanoate (versatate), etc.); organophosphates thereof (e.g., neodymium dibutyl phosphate, neodymium dipentyl phosphate, neodymium dihexyl phosphate, neodymium diheptyl phosphate, neodymium dioctyl phosphate, neodymium bis(1-methylheptyl) phosphate, neodymium bis(2-ethylhexyl) phosphate, neodymium didecyl phosphate, etc.); organophosphonates thereof (e.g., neodymium butyl phosphonate, neodymium pentyl phosphonate, neodymium hexyl phosphonate, neodymium heptyl phosphonate, neodymium octyl phosphonate, neodymium (1-methylheptyl) phosphonate, neodymium (2-ethylhexyl) phosphonate, neodymium decyl phosphonate, neodymium dodecyl phosphonate, neodymium octadecyl phosphonate, etc.); organophosphinates thereof (e.g., neodymium butylphosphinate, neodymium pentylphosphinate, neodymium hexylphosphinate, neodymium heptylphosphinate, neodymium octylphosphinate, neodymium (1-methylheptyl)phosphinate, neodymium (2-ethylhexyl)phosphinate, etc.); carbamates thereof (e.g., neodymium dimethylcarbamate, neodymium diethylcarbamate, neodymium diisopropylcarbamate, neodymium dibutylcarbamate, neodymium dibenzylcarbamate, etc.); dithiocarbamates thereof (e.g., neodymium dimethyldithiocarbamate, neodymium diethyldithiocarbamate, neodymium diisopropyldithiocarbamate, neodymium dibutyldithiocarbamate, etc.); xanthates thereof (e.g., neodymium methylxanthate, neodymium ethylxanthate, neodymium isopropylxanthate, neodymium butylxanthate, neodymium benzylxanthate, etc.); β-diketonates thereof (e.g., neodymium acetylacetonate, neodymium trifluoroacetylacetonate, neodymium hexafluoroacetylacetonate, neodymium benzoylacetonate, etc.); alkoxides or aryloxides thereof (e.g., neodymium methoxide, neodymium ethoxide, neodymium isopropoxide, neodymium phenoxide, neodymium nonylphenoxide, etc.); halides or pseudo-halides thereof (e.g., neodymium fluoride, neodymium chloride, neodymium bromide, neodymium iodide, neodymium cyanide, neodymium cyanate, neodymium thiocyanate, neodymium azide, etc.); oxyhalides thereof (e.g., neodymium oxyfluoride, neodymium oxychloride, neodymium oxybromide, etc.); or organoneodymium-containing compounds including one or more neodymium-carbon bonds (e.g., $Cp_3Nd$, $Cp_2NdR$, $Cp_2NdCl$, $CpNdCl_2$, CpNd (cyclooctatetraene), $(C_5Me_5)_2NdR$, $NdR_3$, $Nd(allyl)_3$, $Nd(allyl)_2Cl$, etc., where R represents a hydrocarbyl group), and may include any one thereof or mixtures of two or more thereof.

Specifically, the neodymium compound may be a compound represented by Formula 1 below.

[Formula 1]

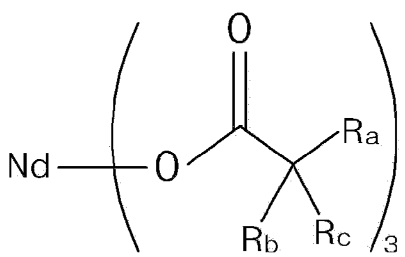

In Formula 1,

$R_a$ to $R_c$ are independently hydrogen or an alkyl group having 1 to 12 carbon atoms, where all $R_a$ to $R_c$ are not hydrogen at

the same time.

In addition, considering excellent solubility in a solvent without fear of oligomerization, a conversion ratio into a catalyst active species, and consequent excellent improving effects of catalyst activity, the neodymium compound may be Formula 1 where $R_a$ is an alkyl group of 4 to 12 carbon atoms, and $R_b$ and $R_c$ are each independently hydrogen or an alkyl group of 1 to 8 carbon atoms.

In a more particular embodiment, the neodymium compound may be Formula 1 where $R_a$ is an alkyl group of 6 to 10 carbon atoms, and $R_b$ and $R_c$ are each independently hydrogen or an alkyl group of 1 to 4 carbon atoms.

In a more particular embodiment, the neodymium compound may be Formula 1 where $R_a$ is an alkyl group of 8 to 10 carbon atoms, and $R_b$ and $R_c$ are each independently hydrogen or an alkyl group of 1 to 3 carbon atoms.

As described above, if the neodymium compound of Formula 1 includes a carboxylate ligand including alkyl groups having diverse lengths of 2 or more carbon atoms as a substituent at $\alpha$ (alpha) position, steric change is induced around a neodymium central metal to block flocculation phenomenon among compounds, and as a result, oligomerization is restrained. In addition, such a neodymium compound has high solubility in a solvent, the ratio of neodymium positioned at the central part, which is difficult to transform into a catalyst active species, is reduced, and a conversion ratio into the active species is high.

More particularly, the neodymium compound may be one or more selected from the group consisting of $Nd(neodecanoate)_3$, $Nd(2\text{-ethylhexanoate})_3$, $Nd(2,2\text{-dimethyl decanoate})_3$, $Nd(2,2\text{-diethyl decanoate})_3$, $Nd(2,2\text{-dipropyl decanoate})_3$, $Nd\ (2,2\text{-dibutyl decanoate})_3$, $Nd(2,2\text{-dihexyl decanoate})_3$, $Nd(2,2\text{-dioctyl decanoate})_3$, $Nd(2\text{-ethyl-2-propyl decanoate})_3$, $Nd(2\text{-ethyl-2-butyl decanoate})_3$, $Nd(2\text{-ethyl-2-hexyl decanoate})_3$, $Nd(2\text{-propyl-2-butyl decanoate})_3$, $Nd(2\text{-propyl-2-hexyl decanoate})_3$, $Nd(2\text{-propyl-2-isopropyl decanoate})_3$, $Nd(2\text{-butyl-2-hexyl decanoate})_3$, $Nd(2\text{-hexyl-2-octyl decanoate})_3$, $Nd\ (2,2\text{-diethyl octanoate})_3$, $Nd(2,2\text{-dipropyl octanoate})_3$, $Nd(2,2\text{-dibutyl octanoate})_3$, $Nd(2,2\text{-dihexyl octanoate})_3$, $Nd(2\text{-ethyl-2-propyl octanoate})_3$, $Nd(2\text{-ethyl-2-hexyl octanoate})_3$, $Nd(2,2\text{-diethyl nonanoate})_3$, $Nd(2,2\text{-dipropyl nonanoate})_3$, $Nd(2,2\text{-dibutyl nonanoate})_3$, $Nd(2,2\text{-dihexyl nonanoate})_3$, $Nd(2\text{-ethyl-2-propyl nonanoate})_3$, and $Nd(2\text{-ethyl-2-hexyl nonanoate})_3$.

In addition, the neodymium compound may have a solubility of about 4 g or more per 6 g of a non-polar solvent at room temperature (23$\pm$5°C). The solubility of the neodymium compound means the degree of clear dissolution without generating turbid phenomenon. Through such high solubility, excellent catalyst activity may be attained.

Also, the neodymium compound may be used in the form of a reactant with a Lewis base. The reactant may improve the solubility of the neodymium compound in the solvent due to the Lewis base and may be stored in a stable state for a long period of time. The Lewis base, for example, may be used in a ratio of 30 mol or less or 1 mole to 10 mol per 1 mol of the neodymium element. Examples of the Lewis base may be acetylacetone, tetrahydrofuran, pyridine, N,N-dimethylformamide, thiophene, diphenyl ether, triethylamine, an organic phosphorus compound, or a monohydric or dihydric alcohol.

(b) First alkylating agent

The first alkylating agent is aluminoxane, and the aluminoxane may be prepared by reacting a trihydrocarbylaluminum-based compound with water. Particularly, the aluminoxane may be linear aluminoxane of Formula 2a below or cyclic aluminoxane of Formula 2b below.

[Formula 2a]

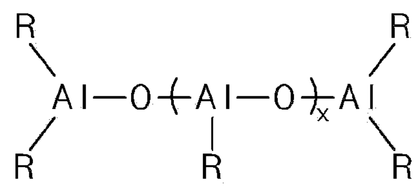

[Formula 2b]

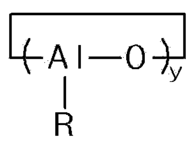

In Formulae 2a and 2b, R is a monovalent organic group bonded to an aluminum atom via a carbon atom, and may be a hydrocarbyl group, and x and y may be each independently an integer of 1 or more, particularly 1 to 100, more particularly 2 to 50.

More particularly, the aluminoxane may include methylaluminoxane (MAO), modified methylaluminoxane (MMAO), ethylaluminoxane, n-propylaluminoxane, isopropylaluminoxane, n-butylaluminoxane, isobutylaluminoxane, n-pentylaluminoxane, neopentylaluminoxane, n-hexylaluminoxane, n-octylaluminoxane, 2-ethylhexylaluminoxane, cylcohexylaluminoxane, 1-methylcyclopentylaluminoxane, phenylaluminoxane, or 2,6-dimethylphenylaluminoxane.

In addition, the modified methylaluminoxane may be one in which a methyl group of methylaluminoxane is substituted with a formula group (R), particularly, a hydrocarbon group having 2 to 20 carbon atoms, and may particularly be a compound represented by Formula 3 below.

[Formula 3]

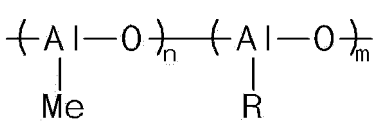

In Formula 3, R is the same as defined above, and m and n may be each independently an integer of 2 or more. Also, in Formula 3, Me represents a methyl group.

Particularly, in Formula 3, R may be an alkyl group having 2 to 20 carbon atoms, a cycloalkyl group having 3 to 20 carbon atoms, an alkenyl group having 2 to 20 carbon atoms, a cycloalkenyl group having 3 to 20 carbon atoms, an aryl group having 6 to 20 carbon atoms, an arylalkyl group having 7 to 20 carbon atoms, an alkylaryl group having 7 to 20 carbon atoms, an allyl group, or an alkynyl group having 2 to 20 carbon atoms, and may particularly be an alkyl group having 2 to 20 carbon atoms such as an ethyl group, an isobutyl group, a hexyl group and an octyl group, and may more particularly be an isobutyl group.

More particularly, the modified methylaluminoxane may be one in which about 50 mol% to 90 mol% of the methyl group of the methylaluminoxane is substituted with the above-described hydrocarbon group. If the amount of the hydrocarbon group substituted in the modified methylaluminoxane is within the above range, alkylation may be promoted to increase the catalyst activity.

The modified methylaluminoxane may be prepared by a common method, and may particularly be prepared using trimethylaluminum and an alkylaluminum except for trimethylaluminum. In this case, the alkylaluminum may be triisopropylaluminum, triethylaluminum, trihexylaluminum, or trioctylaluminum, and any one thereof or mixtures of two or more thereof may be used.

In addition, according to an embodiment of the present invention, the modified conjugated diene-based polymer thus prepared may be formed to have narrow molecular weight distribution, and in respect of improving the physical properties of the polymer, preferably, the first alkylating agent may be methylaluminoxane.

(c) Second alkylating agent

The second alkylating agent is dihydrocarbylaluminum hydride or hydrocarbylaluminum dihydride, and particularly, the second alkylating agent may include dihydrocarbylaluminum hydride such as diethylaluminum hydride, di-n-propylaluminum hydride, diisopropylaluminum hydride, di-n-butylaluminum hydride, diisobutylaluminum hydride (DIBAH), di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride; hydrocarbylaluminum dihydride such as ethylaluminum dihydride, n-propylaluminum dihydride, isopropylaluminum dihydride, n-butylaluminum dihydride, isobutylaluminum dihydride, and n-octylaluminum dihydride; or combinations thereof, without limitation.

Meanwhile, in the catalyst composition according to an embodiment of the present invention, the alkylating agent is an organometal compound which is capable of transporting a hydrocarbyl group to another metal, and may act as a cocatalyst.

In addition, the catalyst composition according to an embodiment of the present invention may further include a common alkylating agent used as an alkylating agent during preparing a common conjugated diene-based polymer in addition to the first and second alkylating agents as necessary, and such an alkylating agent may include alkylaluminum

such as trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, and trioctylaluminum; and an alkylmagnesium compound such as diethylmagnesium, di-n-propylmagnesium, diisopropylmagnesium, dibutylmagnesium, dihexylmagnesium, diphenylmagnesium, and dibenzylmagnesium, and an organolithium compound may include an alkyl lithium compound such as n-butyllithium.

(d) Halide

In addition, the halide is not specifically limited, but may include, for example, elemental halogen, an interhalogen compound, hydrogen halide, an organic halide, a non-metal halide, a metal halide, and an organic metal halide, and any one thereof or mixtures of two or more thereof may be used. Among them, in consideration of catalyst activity enhancement and the resulting improvement effect in reactivity, any one selected from the group consisting of an organic halide, a metal halide, and an organic metal halide, or mixtures of two or more thereof may be used as the halide.

The elemental halogen may include a diatomic molecule compound such as fluorine ($F_2$), chlorine ($Cl_2$), bromine ($Br_2$), and iodine ($I_2$).

Also, the interhalogen compound may include iodine monochloride, iodine monobromide, iodine trichloride, iodine pentafluoride, iodine monofluoride, or iodine trifluoride.

Furthermore, the hydrogen halide may include hydrogen fluoride, hydrogen chloride, hydrogen bromide, or hydrogen iodide.

Also, the organic halide may include t-butyl chloride (t-BuCl), t-butyl bromide, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzyliene bromide, methyltrichlorosilane, phenyltrichlorosilane, dimethyldichlorosilane, diphenyldichlorosilane, trimethylchlorosilane (TMSCl), benzoyl chloride, benzoyl bromide, propionyl chloride, propionyl bromide, methyl chloroformate, methyl bromoformate, iodomethane, diiodomethane, triiodomethane (also referred to as 'iodoform'), tetraiodomethane, 1-iodopropane, 2-iodopropane, 1,3-diiodopropane, t-butyl iodide, 2,2-dimethyl-1-iodopropane (also referred to as 'neopentyl iodide'), allyl iodide, iodobenzene, benzyl iodide, diphenylmethyl iodide, triphenylmethyl iodide, benzylidene iodide (also referred to as 'benzal iodide'), trimethylsilyl iodide, triethylsilyl iodide, triphenylsilyl iodide, dimethyldiiodosilane, diethyldiiodosilane, diphenyldiiodosilane, methyltriiodosilane, ethyltriiodosilane, phenyltriiodosilane, benzoyl iodide, propionyl iodide, and methyl iodoformate.

Furthermore, the non-metal halide may include phosphorous trichloride, phosphorous tribromide, phosphorous pentachloride, phosphorous oxychloride, phosphorous oxybromide, boron trifluoride, boron trichloride, boron tribromide, silicon tetrafluoride, silicon tetrachloride ($SiCl_4$), silicon tetrabromide, arsenic trichloride, arsenic tribromide, selenium tetrachloride, selenium tetrabromide, tellurium tetrachloride, tellurium tetrabromide, silicon tetraiodide, arsenic triiodide, tellurium tetraiodide, boron triiodide, phosphorous triiodide, phosphorous oxyiodide, or selenium tetraiodide.

Also, the metal halide may include tin tetrachloride, tin tetrabromide, aluminum trichloride, aluminum tribromide, antimony trichloride, antimony pentachloride, antimony tribromide, aluminum trifluoride, gallium trichloride, gallium tribromide, gallium trifluoride, indium trichloride, indium tribromide, indium trifluoride, titanium tetrachloride, titanium tetrabromide, zinc dichloride, zinc dibromide, zinc difluoride, aluminum triiodide, gallium triiodide, indium triiodide, titanium tetraiodide, zinc diiodide, germanium tetraiodide, tin tetraiodide, tin diiodide, antimony triiodide, or magnesium diiodide.

Furthermore, the organic metal halide may include dimethylaluminum chloride, diethylaluminum chloride, dimethylaluminum bromide, diethylaluminum bromide, dimethylaluminum fluoride, diethylaluminum fluoride, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride (EASC), isobutylaluminum sesquichloride, methylmagnesium chloride, methylmagnesium bromide, ethylmagnesium chloride, ethylmagnesium bromide, n-butylmagnesium chloride, n-butylmagnesium bromide, phenylmagnesium chloride, phenylmagnesium bromide, benzylmagnesium chloride, trimethyltin chloride, trimethyltin bromide, triethyltin chloride, triethyltin bromide, di-t-butyltin dichloride, dit-butyltin dibromide, di-n-butyltin dichloride, di-n-butyltin dibromide, tri-n-butyltin chloride, tri-n-butyltin bromide, methylmagnesium iodide, dimethylaluminum iodide, diethylaluminum iodide, di-n-butylaluminum iodide, diisobutylaluminum iodide, di-n-octylaluminum iodide, methylaluminum diiodide, ethylaluminum diiodide, n-butylaluminum diiodide, isobutylaluminum diiodide, methylaluminum sesquiiodide, ethylaluminum sesquiiodide, isobutylaluminum sesquiiodide, ethylmagnesium iodide, n-butylmagnesium iodide, isobutylmagnesium iodide, phenylmagnesium iodide, benzylmagnesium iodide, trimethyltin iodide, triethyltin iodide, tri-n-butyltin iodide, di-n-butyltin diiodide, or di-t-butyl tin diiodide.

Furthermore, the catalyst composition according to an embodiment of the present invention may include a non-coordinating anion-containing compound or a non-coordinating anion precursor compound instead of the halide or with the halide.

Particularly, in the compound containing a non-coordinating anion, the non-coordinating anion is a sterically bulky anion that does not form a coordination bond with an active center of a catalyst system due to steric hindrance,

wherein the non-coordinating anion may be a tetraarylborate anion or a fluorinated tetraarylborate anion. In addition, the compound containing a non-coordinating anion may include a counter cation, for example, a carbonium cation such as a triarylcarbonium cation; an ammonium cation such as N,N-dialkyl anilinium cation, or a phosphonium cation, in addition to the above-described non-coordinating anion.

More particularly, the compound containing a non-coordinating anion may include triphenylcarbonium tetrakis(pentafluorophenyl)borate, N,N-dimethylanilinium tetrakis(pentafluorophenyl)borate, triphenylcarbonium tetrakis[3,5-bis(trifluoromethyl)phenyl]borate, or N,N-dimethylanilinium tetrakis[3,5-bis(trifluoromethyl)phenyl]borate.

Also, the non-coordinating anion precursor, as a compound capable of forming a non-coordinating anion under the reaction conditions, may include a triaryl boron compound ($BE_3$, where E is a strong electron-withdrawing aryl group such as a pentafluorophenyl group and a 3,5-bis(trifluoromethyl)phenyl group).

(e) Conjugated diene-based monomer

Also, the catalyst composition may further include a conjugated diene-based monomer, and, since the catalyst composition is used in the form of a preforming or premix catalyst composition in which a portion of the conjugated diene-based monomer used in the polymerization reaction is pre-polymerized by being premixed with the catalyst composition for polymerization, catalyst composition activity may not only be improved, but a conjugated diene-based polymer thus prepared may be stabilized.

In the present invention, the expression "preforming" may denote that, in a case in which a catalyst composition including a neodymium compound, an alkylating agent, and a halide, that is, a catalyst system includes diisobutylaluminum hydride (DIBAH), a small amount of a conjugated diene-based monomer such as 1,3-butadiene, is added to reduce the possibility of producing various catalyst composition active species, and pre-polymerization is performed in the catalyst composition system with the addition of the 1,3-butadiene. Also, the expression "premix" may denote a state in which each compound is uniformly mixed in the catalyst composition system without being polymerized.

In this case, with respect to the conjugated diene-based monomer used for the preparation of the catalyst composition, some amount within a total amount range of the conjugated diene-based monomer used in the polymerization reaction may be used, for example, the conjugated diene-based monomer may be used in an amount of 1 mol to 100 mol, particularly, 10 mol to 50 mol, or 20 mol to 50 mol based on 1 mol of the neodymium compound.

In addition, in the preparation method of a modified conjugated diene-based polymer of the present invention, after preparing an active polymer, a step of terminating polymerization by further using an additive, for example, a reaction quenching agent for the completion of the polymerization reaction such as polyoxyethylene glycol phosphate, or an antioxidant such as 2,6-di-t-butylparacresol may be further included. In addition, together with the reaction quenching agent, an additive that facilitates solution polymerization, for example, an additive such as a chelating agent, a dispersant, a pH controlling agent, a deoxidizer, and an oxygen scavenger, may be further selectively used.

As a result of such polymerization reaction, a conjugated diene-based polymer including an active organometal part derived from the catalyst including the neodymium compound, more particularly, a conjugated diene-based polymer catalyzed with neodymium including a 1,3-butadiene monomer unit may be produced. The conjugated diene-based polymer thus prepared may have living properties or pseudo-living properties.

Step 2

Step 2 is a step of reacting or coupling the active polymer with a modifier, and modification may be performed by reacting the organometal part of the active polymer with the modifier.

The modification reaction may be performed by solution reaction or solid phase reaction, particularly, by solution reaction. In another embodiment, the modification reaction may be performed using a batch type reactor, or by a continuous type using an apparatus such as a multi-step continuous reactor and an inline mixer.

In another embodiment, the modification reaction may be performed under the same temperature and pressure conditions as a common polymerization reaction, and in a particular embodiment, may be performed at a temperature of 30 to 65°C, particularly, 30°C or more, 40°C or more, 45°C or more, 50°C or more, and 65°C or less, 60°C or less, 55°C or less.

The modifier may be used in 0.5 mol to 20 mol based on 1 mol of the neodymium compound in the catalyst composition. Particularly, the modifier may be used in 1 mol to 10 mol based on 1 mol of the neodymium compound in the catalyst composition.

After finishing the above-described modification reaction, the polymerization reaction may be terminated by adding an isopropanol solution of 2,6-di-t-butyl-p-cresol (BHT) to a polymerization reaction system. Thereafter, a modified conjugated diene-based polymer may be obtained through a desolvation treatment, such as steam stripping in which a partial pressure of the solvent is reduced by supplying water vapor, or a vacuum drying treatment. Also, in addition to the above-described modified conjugated diene-based polymer, an unmodified active polymer may be included in a reaction product obtained as a result of the above-described modification reaction.

The method for preparing a modified conjugated diene-based polymer of the present invention may further include precipitating and separating processes for the modified conjugated diene-based polymer thus prepared. Filtering, separating and drying processes for the precipitated modified conjugated diene-based polymer may be performed according to common methods.

As described above, according to the modified conjugated diene-based polymer prepared according to an embodiment of the present invention, a modified conjugated diene-based polymer having excellent physical properties as well as narrow molecular weight distribution, particularly, a neodymium-catalyzed butadiene-based polymer may be prepared.

In addition, provided is a modified conjugated diene-based polymer prepared by the preparation method.

The modified conjugated diene-based polymer is prepared under conditions of the catalyst composition having the above-described characteristics and polymerization temperature, and a rubber composition including the same may have optimized molecular weight distribution to improve the balance of physical properties including viscoelasticity, tensile properties and processability, and high linearity.

The modification ratio of the modified conjugated diene-based polymer may be 5 to 80 mol%, particularly, 10 to 80 mol%, or 20 to 80 mol%. Within this range, the mechanical properties including tensile properties and viscoelasticity properties of the rubber composition including the modified conjugated diene-based polymer may be excellent. The modification ratio may mean a ratio of the modified conjugated diene-based polymer reacted or coupled with the modifier in step 2 among the active polymer prepared in step 1.

The modified conjugated diene-based polymer may have the cis-1,4 bond content of a conjugated diene part measured through Fourier-transform infrared spectroscopy (FT-IR) of 95% or more, 96% or more, 96.5% or more. If the modified conjugated diene-based polymer is used in a rubber composition, the abrasion resistance, crack resistance and ozone resistance of the rubber composition may be improved.

In addition, the modified conjugated diene-based polymer may have the vinyl bond content of a conjugated diene part measured through Fourier-transform infrared spectroscopy of 5% or less, 3% or less, 1% or less, 0.7% or less. If the vinyl content in the polymer is greater than 5%, the abrasion resistance, crack resistance and ozone resistance of a rubber composition including the same may be deteriorated.

Here, the cis-1,4 bond content and the vinyl content in the polymer by FT-IR may be obtained by measuring FT-IR transmittance spectrum of the carbon disulfide solution of a conjugated diene-based polymer that is prepared at a concentration of 5 mg/ml with carbon disulfide of the same cell as a blank, and using the maximum peak value around 1130 $cm^{-1}$ (a, base line), the minimum peak value around 967 $cm^{-1}$ (b) showing a trans-1,4 bond, the minimum peak value around 911 $cm^{-1}$ (c) showing a vinyl bond, and the minimum peak value around 736 $cm^{-1}$ (d) showing a cis-1,4 bond of the measured spectrum.

The conjugated diene-based polymer may have molecular weight distribution of 1.5 to 3.5, particularly, the molecular weight distribution of the conjugated diene-based polymer may be 2.0 or more, and 3.0 or less, 2.8 or less. With the narrow molecular weight distribution, if used in a rubber composition, tensile properties and viscoelasticity may be excellent.

The molecular weight distribution may be calculated from the ratio (Mw/Mn) of the weight average molecular weight (Mw) to the number average molecular weight (Mn). The number average molecular weight (Mn) is a common average of the molecular weight of individual polymer, which is calculated by measuring the molecular weights of n polymer molecules, obtaining the total of the molecular weights, and dividing the total by n, and the weight average molecular weight (Mw) represents the molecular weight distribution a polymer composition. All average molecular weights may be represented by gram per mole (g/mol). In addition, each of the weight average molecular weight and the number average molecular weight may mean a polystyrene converted molecular weight analyzed by gel permeation chromatography (GPC).

The conjugated diene-based polymer may satisfy the molecular weight distribution conditions and at the same time, have the weight average molecular weight (Mw) of $4 \times 10^5$ to $1.0 \times 10^6$ g/mol, particularly, $4.00 \times 10^5$ g/mol or more, $4.50 \times 10^5$ g/mol or more, $5.00 \times 10^5$ g/mol or more, $6.00 \times 10^5$ g/mol or more, $7.00 \times 10^5$ g/mol or more, and $1.00 \times 10^6$ g/mol or less, $9.00 \times 10^5$ g/mol or less.

In addition, the number average molecular weight (Mn) may be $2.0 \times 10^5$ to $5.0 \times 10^5$ g/mol, $2.00 \times 10^5$ g/mol or more, $2.50 \times 10^5$ g/mol or more, $2.70 \times 10^5$ g/mol or more, and $5.00 \times 10^5$ g/mol or less, $4.00 \times 10^5$ g/mol or less, $3.50 \times 10^5$ g/mol or less.

Within these ranges, if used in a rubber composition, tensile properties are excellent, processability is excellent, the workability of a rubber composition is improved, mulling and kneading are easy, and effects of excellent mechanical properties and balance of physical properties of the rubber composition may be achieved.

More particularly, if the conjugated diene-based polymer satisfies the weight average molecular weight (Mw) and the number average molecular weight conditions together with the molecular weight distribution, and if used in a rubber composition, tensile properties, viscoelasticity and processability of the rubber composition are excellent, and balance among them is excellent.

In addition, the modified conjugated diene-based polymer may have a mooney viscosity (MV) at 100°C of 20 to 100, particularly, 20 or more, 30 or more, 35 or more, 40 or more, 50 or more, and 100 or less, 80 or less, 75 or less, 70 or less. The modified conjugated diene-based polymer according to the present invention has the mooney viscosity in the range, and may have excellent processability.

The mooney viscosity may be measured by, for example, using MV2000E of Monsanto Co. using Large Rotor at a rotor speed of $2\pm0.02$ rpm at 100°C. In this case, a specimen used was stood at room temperature ($23\pm3$°C) for 30 minutes or more, and $27\pm3$ g of the specimen was collected and put in a die cavity, and then, Platen was operated, and the mooney viscosity was measured.

The modified conjugated diene-based polymer may have a beta value (β-value) of 0.190 or more, particularly, 0.195 or more, 0.200 or more, 0.210 or more. With the high beta value, if applied to a rubber composition, resistance properties and fuel consumption properties may be excellent.

Here, the beta value denotes the change of viscoelasticity coefficient according to the frequency change in response to the same amount of strain, wherein it is an index indicating linearity of a polymer. Commonly, the linearity of the polymer is low as the beta value is reduced, and if used in a rubber composition, rolling resistance or rotation resistance increases as the linearity is reduced.

The beta value is obtained by obtaining a slope of Log(1/tan delta) vs Log(Freq.) by performing frequency sweep in conditions of 100°C with strain of 7% by using a rubber process analyzer (RPA2000, AlphsTechnoligies Co.), and by calculating thereby. In this case, the frequency was set to 2, 5, 10, 20, 50, 100, 200, 500, 1,000, and 2,000 cpm.

Further, provided is a rubber composition including the modified conjugated diene-based polymer and a molded article manufactured from the rubber composition.

The rubber composition may include the modified conjugated diene-based polymer in 0.1 wt% to 100 wt%, particularly, 10 wt% to 100 wt%, or 20 wt% to 90 wt%. If the amount of the modified conjugated diene-based polymer is less than 0.1 wt%, effects of improving abrasion resistance and crack resistance of a molded article manufactured by using the rubber composition, for example, a tire, may be insignificant.

Also, the rubber composition may further include other rubber components as necessary, in addition to the modified conjugated diene-based polymer, and in this case, the rubber component may be included in an amount of 90 wt% or less based on the total weight of the rubber composition. Particularly, the rubber component may be included in an amount of 1 part by weight to 900 parts by weight based on 100 parts by weight of the modified conjugated diene-based polymer.

The rubber component may be a natural rubber or a synthetic rubber, and, for example, the rubber component may be a natural rubber (NR) including cis-1, 4-polyisoprene; a modified natural rubber, such as an epoxidized natural rubber (ENR), a deproteinized natural rubber (DPNR), and a hydrogenated natural rubber, in which the general natural rubber is modified or purified; and a synthetic rubber such as a styrene-butadiene rubber (SBR), polybutadiene (BR), polyisoprene (IR), a butyl rubber (IIR), an ethylenepropylene copolymer, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), a polysulfide rubber, an acrylic rubber, an urethane rubber, a silicon rubber, an epichlorohydrin rubber, and a halogenated butyl rubber. Any one thereof or mixtures of two or more thereof may be used.

Furthermore, the rubber composition may include 0.1 parts by weight to 150 parts by weight of a filler based on 100 parts by weight of the conjugated diene-based polymer, and the filler may include a silica-based filler, a carbon black-based filler, or a combination thereof. Particularly, the filler may be carbon black.

The carbon black-based filler is not specifically limited, but, for example, may have a nitrogen surface area per gram ($N_2SA$, measured according to JIS K 6217-2:2001) of 20 $m^2/g$ to 250 $m^2/g$. Also, the carbon black may have a dibutyl phthalate (DBP) oil absorption of 80 cc/100 g to 200 cc/100 g. If the nitrogen surface area per gram of the carbon black is greater than 250 $m^2/g$, processability of a rubber composition may be reduced, and, if the nitrogen surface area per gram of the carbon black is less than 20 $m^2/g$, reinforcement by carbon black may be insignificant. Furthermore, if the DBP oil absorption of the carbon black is greater than 200 cc/100 g, the processability of the rubber composition may be reduced, and, if the DBP oil absorption of the carbon black is less than 80 cc/100 g, the reinforcement by carbon black may be insignificant.

Also, the silica is not specifically limited, but, for example, may include wet silica (hydrous silicic acid), dry silica (anhydrous silicic acid), calcium silicate, aluminum silicate, or colloidal silica. Particularly, the silica may be wet silica in which an effect of improving both fracture characteristics and wet grip is the most significant. In addition, the silica may have a nitrogen surface area per gram ($N_2SA$) of 120 $m^2/g$ to 180 $m^2/g$, and a cetyltrimethylammonium bromide (CTAB) surface area per gram of 100 $m^2/g$ to 200 $m^2/g$. If the nitrogen surface area per gram of the silica is less than 120 $m^2/g$, reinforcement by silica may be reduced, and, if the nitrogen surface area per gram of the silica is greater than 180 $m^2/g$, the processability of a rubber composition may be reduced. Also, if the CTAB surface area per gram of the silica is less than 100 $m^2/g$, the reinforcement by silica, as the filler, may be reduced, and, if the CTAB surface area per gram of the silica is greater than 200 $m^2/g$, the processability of a rubber composition may be reduced.

Meanwhile if silica is used as the filler, a silane coupling agent may be used together for the improvement of reinforcement and low heat generation property.

Particular examples of the silane coupling agent may be bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyl trimethoxysilane, 3-mercaptopropyl triethoxysilane, 2-mercaptoethyl trimethoxysilane, 2-mercaptoethyl triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyl dimethoxymethylsilane, dimethoxymethylsilylpropyl-N,N-dimethylthiocarbamoyl tetrasulfide, or dimethoxymethylsilylpropyl benzothiazolyl tetrasulfide, and any one thereof or mixtures of two or more thereof may be used. More particularly, in consideration of the effect of improving the reinforcement, the silane coupling agent may be bis(3-triethoxysilylpropyl)polysulfide or 3-trimethoxysilylpropyl benzothiazyl tetrasulfide.

Also, the rubber composition may be sulfur crosslinkable, and accordingly, may further include a vulcanizing agent.

The vulcanizing agent may particularly be sulfur powder, and may be included in 0.1 to 10 parts by weight based on 100 parts by weight of the rubber component. If the vulcanizing agent is included within the above range, elastic modulus and strength required for a vulcanized rubber composition may be secured and simultaneously, a low fuel consumption ratio may be obtained.

In addition, the rubber composition may further include various additives, such as a vulcanization accelerator, a process oil, a plasticizer, an antiaging agent, a scorch inhibitor, zinc white, stearic acid, a thermosetting resin, or a thermoplastic resin, used in the general rubber industry, in addition to the above-described components.

The vulcanization accelerator is not specifically limited, but particularly, a thiazole-based compound such as 2-mercaptobenzothiazole (M), dibenzothiazyl disulfide (DM), and N-cyclohexylbenzothiazole-2-sulfenamide (CZ), or a guanidine-based compound such as diphenylguanidine (DPG) may be used. The vulcanization accelerator may be included in 0.1 to 5 parts by weight based on 100 parts by weight of the rubber component.

Also, the process oil acts as a softener in the rubber composition, and particularly, the process oil may be a paraffin-based, naphthene-based, or aromatic compound, and more particularly, the aromatic compound may be used in consideration of tensile strength and abrasion resistance, and the naphthene-based or paraffin-based process oil may be used in consideration of hysteresis loss and low temperature characteristics. The process oil may be included in an amount of 100 parts by weight or less based on 100 parts by weight of the rubber component, and if the process oil is included in the above amount, decreases in tensile strength and low heat generation property (low fuel consumption ratio) of the vulcanized rubber may be prevented.

In addition, particular examples of the antiaging agent may be N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a high-temperature condensate of diphenylamine and acetone. The antiaging agent may be used in 0.1 to 6 parts by weight based on 100 parts by weight of the rubber component.

The rubber composition may be obtained by kneading the above compounding prescription using a kneader such as a Banbury mixer, a roll, and an internal mixer, and a rubber composition having excellent abrasion resistance as well as low heat generation property may be obtained by a vulcanization process after molding.

Accordingly, the rubber composition may be suitable for the manufacture of each member of a tire such as a tire's tread, an under tread, a sidewall, a carcass coating rubber, a belt coating rubber, a bead filler, a chafer, and a bead coating rubber, or various industrial rubber products such as an anti-vibration rubber, a belt conveyor, and a hose.

The molded article manufactured by using the rubber composition may include a tire or a tire's tread.

## Examples

Hereinafter, the present invention will be described in more detail according to examples. However, the following examples are merely presented to exemplify the present invention, and the scope of the present invention is not limited thereto.

### [Preparation of modifier]

To a solution in which 2 g of ethyl piperidine-4-carboxylate was dissolved in dichloromethane ($CH_2Cl_2$), 1.77 ml of triethylamine ($Et_3N$) and 1.62 ml of trimethylsilyl chloride (TMSCl) were added at 0°C, and the mixture thus obtained was stirred at 0°C for 5 hours. Then, a solvent in the solution obtained was evaporated under a reduced pressure, and the resultant residue was redissolved in hexane and repeatedly filtered with hexane twice. The raw material thus filtered was

separated through distillation under a reduced pressure to obtain ethyl 1-(trimethylsilyl)piperidine-4-carboxylate with a structure below, and $^1$H nuclear magnetic resonance spectrum was observed.

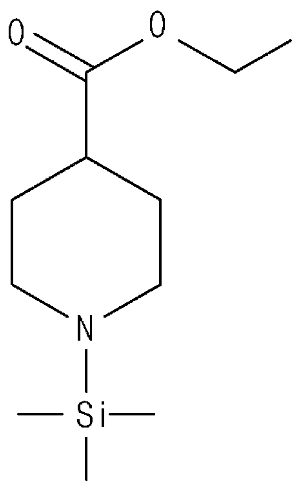

$^1$H NMR(500 MHz, $CDCl_3$): δ 4.11-4.08 (m, 2H), δ 3.13-3.11(m, 2H), δ 2.61-2.54(m, 2H), δ 2.34-2.32(m, 1H), δ 1.74 (m, 2H), δ 1.42(m, 2H), δ 1.23-1.22(m, 3H), δ 0.05-0.00(m, 9H).

**[Preparation of catalyst composition]**

**Preparation Example 1**

Under nitrogen conditions, neodymium versatate (NdV, 0.80 mmol) was added to a hexane solvent, and methylaluminoxane (MAO, 80.0 mmol), diisobutylaluminum hydride (DIBAH, 16.0 mmol), diethylaluminum chloride (DEAC, 1.92 mmol) and 1,3-butadiene (16.0 mmol) were injected thereto in order, followed by mixing at -20°C for 12 hours to prepare a catalyst composition (NdV : DIBAH = 1 : 20). The catalyst composition thus prepared was stored at -30 to -20°C for 24 hours under nitrogen conditions and then, used.

**Preparation Example 2**

Under nitrogen conditions, neodymium versatate (NdV, 0.60 mmol) was added to a hexane solvent, and methylaluminoxane (MAO, 60.0 mmol), diisobutylaluminum hydride (DIBAH, 18.0 mmol), diethylaluminum chloride (DEAC, 1.44 mmol) and 1,3-butadiene (12.0 mmol) were injected thereto in order, followed by mixing at -20°C for 12 hours to prepare a catalyst composition (NdV : DIBAH = 1 : 30). The catalyst composition thus prepared was stored at -30 to -20°C for 24 hours under nitrogen conditions and then, used.

**Preparation Example 3**

Under nitrogen conditions, neodymium versatate (NdV, 0.40 mmol) was added to a hexane solvent, and methylaluminoxane (MAO, 40.0 mmol), diisobutylaluminum hydride (DIBAH, 14.0 mmol), diethylaluminum chloride (DEAC, 0.96 mmol) and 1,3-butadiene (8.0 mmol) were injected thereto in order, followed by mixing at -20°C for 12 hours to prepare a catalyst composition (NdV : DIBAH = 1 : 35). The catalyst composition thus prepared was stored at -30 to -20°C for 24 hours under nitrogen conditions and then, used.

**Comparative Preparation Example 1**

Under nitrogen conditions, neodymium versatate (NdV, 1.00 mmol) was added to a hexane solvent, and methylaluminoxane (MAO, 40.0 mmol), diisobutylaluminum hydride (DIBAH, 10.0 mmol), diethylaluminum chloride (DEAC, 2.40 mmol) and 1,3-butadiene (30.0 mmol) were injected thereto in order, followed by mixing at -20°C for 12 hours to prepare a catalyst composition (NdV : DIBAH = 1 : 10). The catalyst composition thus prepared was stored at -30 to -20°C for 24 hours under nitrogen conditions and then, used.

**Comparative Preparation Example 2**

Under nitrogen conditions, neodymium versatate (NdV, 0.20 mmol) was added to a hexane solvent, and methylaluminoxane (MAO, 20.0 mmol), diisobutylaluminum hydride (DIBAH, 10.0 mmol), diethylaluminum chloride (DEAC, 0.48 mmol) and 1,3-butadiene (4.0 mmol) were injected thereto in order, followed by mixing at -20°C for 12 hours to prepare a catalyst composition (NdV : DIBAH = 1 : 50). The catalyst composition thus prepared was stored at -30 to -20°C for 24 hours under nitrogen conditions and then, used.

**[Preparation of modified or unmodified conjugated diene-based polymer]**

**Example 1**

To a completely dried reactor, vacuum and nitrogen were alternately applied, and to a 15 L, reactor in a vacuum state, 4.2 kg of hexane and 500 g of 1,3-butadiene were injected, and the temperature was elevated to 40°C. The catalyst composition of Preparation Example 1 was added thereto, and polymerization was performed for 60 minutes to prepare an active polymer.

To the active polymer, a hexane solution including 2.5 g of the modifier compound thus prepared was added, and modification reaction was performed under the same temperature conditions as the polymerization conditions for 60 minutes.

Then, a hexane solution including 1.0 g of a polymerization quenching agent and a hexane solution including 2.0 g of an antioxidant were added to terminate the reaction and prepare a modified conjugated diene-based polymer.

**Example 2**

A modified conjugated diene-based polymer was prepared by the same method in Example 1 except that the temperature of the reactor was elevated to 50°C.

**Example 3**

A modified conjugated diene-based polymer was prepared by the same method in Example 1 except that the temperature of the reactor was elevated to 60°C.

**Example 4**

A modified conjugated diene-based polymer was prepared by the same method in Example 1 except that the catalyst composition of Preparation Example 2 was used instead of Preparation Example 1, and the temperature of the reactor was elevated to 50°C.

**Example 5**

A modified conjugated diene-based polymer was prepared by the same method in Example 1 except that the catalyst composition of Preparation Example 3 was used instead of Preparation Example 1, and the temperature of the reactor was elevated to 50°C.

**Comparative Example 1**

BR1208 (manufacturer, LG Chem, Co.) was used as an unmodified Nd-BR.

**Comparative Example 2**

CB24 (manufacturer, Lanxess Co.) was used as an unmodified Nd-BR.

**Comparative Example 3**

A modified conjugated diene-based polymer was prepared by the same method in Example 1 except that the catalyst composition of Comparative Preparation Example 1 was used instead of Preparation Example 1, and the temperature of the reactor was elevated to 50°C.

**Comparative Example 4**

A modified conjugated diene-based polymer was prepared by the same method in Example 1 except that the catalyst composition of Comparative Preparation Example 1 was used instead of Preparation Example 1, and the temperature of the reactor was elevated to 70°C.

**Comparative Example 5**

A modified conjugated diene-based polymer was prepared by the same method in Example 1 except that the catalyst composition of Comparative Preparation Example 2 was used instead of Preparation Example 1, and the temperature of the reactor was elevated to 50°C.

**Comparative Example 6**

A modified conjugated diene-based polymer was prepared by the same method in Example 1 except that the temperature of the reactor was elevated to 70°C.

**Comparative Example 7**

A modified conjugated diene-based polymer was prepared by the same method in Example 1 except that the catalyst composition of Preparation Example 2 was used instead of Preparation Example 1, and the temperature of the reactor was elevated to 70°C.

**Comparative Example 8**

A modified conjugated diene-based polymer was prepared by the same method in Example 1 except that the catalyst composition of Preparation Example 3 was used instead of Preparation Example 1, and the temperature of the reactor was elevated to 70°C.

[Table 1]

| | Catalyst composition | NdV:DIBAH molar ratio | Polymerization temperature (°C) |
|---|---|---|---|
| Example 1 | Preparation Example 1 | 1:20 | 40 |
| Example 2 | Preparation Example 1 | 1:20 | 50 |
| Example 3 | Preparation Example 1 | 1:20 | 60 |
| Example 4 | Preparation Example 2 | 1:30 | 50 |
| Example 5 | Preparation Example 3 | 1:35 | 50 |
| Comparative Example 1 | Unmodified Nd-BR | | |
| Comparative Example 2 | Unmodified Nd-BR | | |
| Comparative Example 3 | Comparative Preparation Example 1 | 1:10 | 50 |
| Comparative Example 4 | Comparative Preparation Example 1 | 1:10 | 70 |
| Comparative Example 5 | Comparative Preparation Example 2 | 1: 50 | 50 |
| Comparative Example 6 | Preparation Example 1 | 1:20 | 70 |
| Comparative Example 7 | Preparation Example 2 | 1:30 | 70 |
| Comparative Example 8 | Preparation Example 3 | 1:35 | 70 |

**[Analysis of physical properties of modified conjugated diene-based polymer]**

**Experimental Example 1**

With respect to the polymers prepared in the Examples and the Comparative Examples, physical properties were analyzed according to the methods below, and the results are shown in Table 1.

(1) Microstructure analysis

The cis-1,4 bond content, the trans-1,4 bond content, and the vinyl content in a conjugated diene part were measured by Fourier transform infrared spectroscopy (FT-IR).

Particularly, after measuring a FT-IR transmittance spectrum of a carbon disulfide solution of a conjugated diene-based polymer prepared at a concentration of 5 mg/mL by using disulfide carbon of the same cell as a blank, each content was obtained by using a maximum peak value (a, base line) near 1,130 $cm^{-1}$ of the measurement spectrum, a minimum peak value (b) near 967 $cm^{-1}$ which indicates a trans 1,4 bond, a minimum peak value (c) near 911 $cm^{-1}$ which indicates a vinyl bond, and a minimum peak value (d) near 736 $cm^{-1}$ which indicates a cis 1,4 bond.

(2) Weight average molecular weight (Mw), number average molecular weight (Mn) and molecular weight distribution (MWD)

Each polymer was dissolved in tetrahydrofuran (THF) for 30 minutes under 40°C conditions, and the resultant solution was loaded on gel permeation chromatography (GPC) and flown. In this case, two columns of PLgel Olexis and one column of PLgel mixed-C (trade name, Polymer Laboratories Co.) were used in combination. Also, newly replaced columns were all mixed bed type columns, and polystyrene was used as a gel permeation chromatography standard material.

(3) Mooney viscosity (MV, ML1+4, @100°C)

The mooney viscosity (ML1+4, @100°C) (MU) was measured by using MV2000E of Monsanto Co. using Large Rotor at a rotor speed of 2±0.02 rpm at 100°C. In this case, a specimen used was stood at room temperature (23±3°C) for 30 minutes or more, and 27±3 g of the specimen was collected and put in a die cavity, and then, Platen was operated, and the mooney viscosity was measured while applying torque.

(4) Beta value (β-value)

The beta value for each polymer was measured using a rubber process analyzer (RPA2000, AlphaTechnologies Co.).

Particularly, frequency sweep was performed for each polymer in conditions of 100°C with strain of 7%. In this case, the frequency was set to 2, 5, 10, 20, 50, 100, 200, 500, 1,000, and 2,000 cpm, and a slope of Log(1/tan delta) vs Log(Freq.) was calculated to obtain the beta value.

(5) Modification ratio (%)

The modification ratio was calculated using a chromatogram obtained from measurement of chromatography. Particularly, each polymer was dissolved in tetrahydrofuran (THF) under 40°C conditions to prepare a specimen, and each specimen was injected into gel permeation chromatography (GPC), tetrahydrofuran was flown as an eluent to obtain a chromatogram, and from the chromatogram thus obtained, the modification ratio was calculated by Mathematical Formula below.

Modification ratio (%) = [(peak area of modified polymer)/(peak area of unmodified polymer + peak area of modified polymer)] x 100

[Table 2]

| Division | | Example | | | | | Comparative Example | | | | | | | |
|---|---|---|---|---|---|---|---|---|---|---|---|---|---|---|
| | | 1 | 2 | 3 | 4 | 5 | 1 | 2 | 3 | 4 | 5 | 6 | 7 | 8 |
| Micros tructu re analys is | cis-1, 4 bond | 97. 3 | 97. 2 | 97. 0 | 96. 7 | 96. 6 | 96. 2 | 96. 3 | 96. 4 | 96. 2 | 96. 7 | 96. 9 | 96. 5 | 96 .3 |
| | trans-1,4 bond | 2.3 | 2. 4 | 2. 4 | 2.7 | 2.8 | 1.8 | 2.9 | 3.0 | 3.0 | 2.7 | 2.5 | 2.7 | 2. 9 |
| | Vinyl bond | 0.4 | 0.4 | 0.6 | 0.6 | 0.6 | 2.0 | 0.8 | 0.6 | 0.8 | 0.6 | 0.6 | 0.8 | 0. 8 |
| GPC result s | Mn ($\times 10^5$ g/mol) | 3.3 5 | 2. 9 6 | 2.9 2 | 2. 9 4 | 2.9 1 | 1.5 7 | 2.4 1 | 2. 4 0 | 2.3 3 | 2.5 4 | 2.8 8 | 2.8 5 | 2. 47 |
| | Mw ($\times 10^5$ g/mol) | 8.8 0 | 7.9 2 | 7.9 1 | 7.9 3 | 7.9 2 | 7.7 8 | 5.9 2 | 6.9 3 | 6. 9 5 | 6. 9 6 | 7.9 5 | 7.9 5 | 6. 92 |
| | MWD (Mw/Mn) | 2.6 3 | 2.6 7 | 2.7 1 | 2.7 0 | 2.7 2 | 4.9 6 | 2. 4 5 | 2.8 6 | 2.9 8 | 2.7 3 | 2.7 5 | 2.7 8 | 2. 79 |
| Mooney viscosity (MV) | | 67 | 56 | 52 | 53 | 51 | 45 | 45 | 46 | 44 | 49 | 60 | 58 | 49 |
| Beta value | | 0.2 64 | 0.2 32 | 0.2 19 | 0.2 20 | 0.2 17 | - | 0.1 81 | 0.1 83 | 0.1 68 | 0.1 93 | 0.1 90 | 0.1 85 | 0. 18 2 |
| Modification ratio (%) | | 47 | 35 | 27 | 28 | 25 | - | - | 13 | <5 | 10 | 14 | 10 | 8 |

According to the preparation method of the present invention, in Examples 1-5, using the catalyst compositions having the molar ratio of the NdV (neodymium compound) and the second alkylating agent (DIBAH) of 1 : 20 - 1 : 35, and polymerizing at a temperature in 30-65°C, modified conjugated diene-based polymers having excellent living properties of an active polymer, showing a high modification ratio, and having excellent linearity were prepared.

Meanwhile, in Comparative Examples 3 and 4, using the catalyst composition of Comparative Preparation Example 1 with a too small amount of the second alkylating agent (DIBAH), in Comparative Example 5 using the catalyst composition of Comparative Preparation Example 2 with an excessive amount of the second alkylating agent (DIBAH), and in Comparative Examples 6-8, using the catalyst compositions of Preparation Examples 1-3 but polymerizing at too high polymerization temperature of 70°C, it was confirmed that the modification ratio was low when compared with that of the Examples.

**[Preparation of rubber composition and analysis of physical properties]**

**Experimental Example 2**

After preparing rubber compositions and rubber specimens using the butadiene polymers prepared in the Examples and the butadiene polymers prepared in the Comparative Examples, tensile strength, 300% modulus, elongation and viscoelasticity properties were measured by the methods below, respectively. The results are shown in Table 3 below.

Particularly, 70 parts by weight of carbon black, 22.5 parts by weight of a process oil, 2 parts by weight of an antiaging agent (TMDQ), 3 parts by weight of zinc oxide (ZnO), and 2 parts by weight of stearic acid were mixed with 100 parts by weight of each of the polymers to prepare each rubber composition. Thereafter, 2 parts by weight of sulfur, 2 parts by weight of a vulcanization accelerator (CZ), and 0.5 parts by weight of a vulcanization accelerator (DPG) were added to each rubber composition, and gently mixed at 50°C for 1.5 minutes at 50 rpm and then, a vulcanized mixture compound in a sheet shape was obtained using a roll of 50°C. The vulcanized mixture compound was vulcanized at 160°C for 25 minutes to prepare a rubber specimen.

(1) Tensile properties

After vulcanizing each rubber composition at 150°C for t90 minutes, tensile strength (kg·f/cm$^2$), modulus when elongated by 300% (300% modulus, M-300%, kg·f/cm$^2$) and elongation when breaking were measured according to ASTM D412.

(2) Viscoelasticity properties (Tan δ value at 60°C)

Tan δ properties, that are the major factors of low fuel consumption properties were measured using DMTS 500N of Gabo Co. in Germany at a frequency of 10 Hz, prestrain of 3%, and dynamic strain of 3%, and viscoelasticity coefficients (Tan δ) at 60°C were measured. In this case, with the increase of the Tan δ value at 60°C, hysteresis loss was decreased, and rotation resistance was excellent, that is, the fuel consumption properties were excellent.

[Table 3]

| Division | | Example | | | | | Comparative Example | | | | | | | |
|---|---|---|---|---|---|---|---|---|---|---|---|---|---|---|
| | | 1 | 2 | 3 | 4 | 5 | 1 | 2 | 3 | 4 | 5 | 6 | 7 | 8 |
| Tensile properties (Index) | Tensile strength | 117 | 114 | 113 | 114 | 113 | 100 | 106 | 106 | 109 | 106 | 106 | 106 | 105 |
| | M-300% | 132 | 128 | 125 | 126 | 124 | 100 | 115 | 119 | 118 | 119 | 120 | 119 | 118 |
| | Elongation | 90 | 94 | 96 | 95 | 96 | 100 | 96 | 91 | 96 | 90 | 90 | 90 | 92 |
| Viscoelasticity properties (Index) | Tanδ at 60°C | 151 | 143 | 137 | 138 | 135 | 100 | 116 | 126 | 123 | 125 | 127 | 126 | 124 |

The index value of the tensile properties was calculated by Mathematical Formula 1 below with the value of

Comparative Example 1 as 100, and the index value of the viscoelasticity properties were calculated by Mathematical Formula 2 below with the value of Comparative Example 1 as 100.

[Mathematical Formula 1]

$$\text{Index} = (\text{measured value}/\text{standard value}) \times 100$$

[Mathematical Formula 2]

$$\text{Index} = (\text{standard value}/\text{measured value}) \times 100$$

As shown in Table 3, it was confirmed that if the modified conjugated diene-based polymer prepared by the preparation method of the present invention was processed into a rubber specimen, excellent tensile properties and viscoelasticity properties were shown.

Particularly, Examples 2, 4 and 5 used the catalyst compositions of Preparation Examples 1 to 3, respectively, Comparative Example 3 used the catalyst composition of Comparative Preparation Example 1, and Comparative Example 5 used the catalyst composition of Comparative Preparation Example 2, with the same polymerization temperature of 50°C. As a result, all Examples 2, 4 and 5 showed improved tensile properties and viscoelasticity properties when compared with Comparative Example 3 or 5. Through this, it could be found that though the polymerization temperature was included in the range of the present invention, if the molar ratio of the neodymium compound and the second alkylating agent of the catalyst composition deviated from the range of the present invention, the compounding properties of the modified conjugated diene-based polymer were deteriorated.

In addition, Examples 1-3 and Comparative Example 6 used the catalyst composition of Preparation Example 1, Example 4 and Comparative Example 7 used the catalyst composition of Preparation Example 2, and Example 5 and Comparative Example 8 used the catalyst composition of Preparation Example 3. However, with respect to the polymerization temperature, Examples 1-5 were polymerized at a temperature of 40°C, 50°C or 60°C, which is included in the range of the present invention (30 to 65°C), and Comparative Examples 6-8 were polymerized at 70°C which is higher than the range of the present invention. In this case, all Examples 1-5 showed markedly improved tensile properties and viscoelasticity properties when compared with Comparative Examples 6-8. Particularly, if the Examples and Comparative Examples using the same catalyst composition were compared, it was clearly confirmed that though the catalyst composition satisfying the molar ratio of the neodymium compound and the second alkylating agent, as defined in the present invention, if the polymerization temperature deviated from 30-65°C, and the deterioration of physical properties was induced.

As described above, if using a catalyst composition having the molar ratio of a neodymium compound and a second alkylating agent of 1 : 20 to 1 : 35 and at the same time, performing polymerization at a temperature of 30 to 65°C according to the preparation method of the present invention, a modified conjugated diene-based polymer having a high modification ratio and excellent compounding properties may be prepared.

## Claims

**1.** A method for preparing a modified conjugated diene-based polymer, the method comprising:

polymerizing a conjugated diene-based monomer in the presence of a catalyst composition comprising a neodymium compound, a first alkylating agent, a second alkylating agent and a halide in a hydrocarbon solvent to prepare an active polymer; and
reacting or coupling the active polymer with a modifier,
wherein a molar ratio of the neodymium compound and the second alkylating agent is 1 : 20 to 1 : 35, and the polymerizing is performed at a temperature of 30 to 65°C,
wherein the modifier is ethyl 1-(trimethylsilyl)piperidine-4-carboxylate,
wherein the first alkylating agent is aluminoxane, and
wherein the second alkylating agent is dihydrocarbylaluminum hydride or hydrocarbylaluminum dihydride.

**2.** The method for preparing a modified conjugated diene-based polymer according to claim 1, wherein the polymerizing is performed at a temperature of 40 to 65°C for 15 minutes to 3 hours.

**3.** The method for preparing a modified conjugated diene-based polymer according to claim 1, further comprising: mixing

the neodymium compound, the first alkylating agent, the second alkylating agent and the halide at -30 to -20°C and standing the mixture thus obtained at -30 to -20°C for 24 to 36 hours to prepare the catalyst composition, prior to preparing the active polymer.

**4.** The method for preparing a modified conjugated diene-based polymer according to claim 1, wherein a molar ratio of the neodymium compound, the first alkylating agent, the second alkylating agent and the halide comprised in the catalyst composition is 1 : (50 to 200) : (20 to 35) : (2 to 5).

**5.** The method for preparing a modified conjugated diene-based polymer according to claim 1, wherein the neodymium compound is 0.01 to 0.50 mmol based on 100 g of the conjugated diene-based monomer.

**6.** The method for preparing a modified conjugated diene-based polymer according to claim 1, wherein the neodymium compound is a compound represented by the following Formula 1:

[Formula 1]

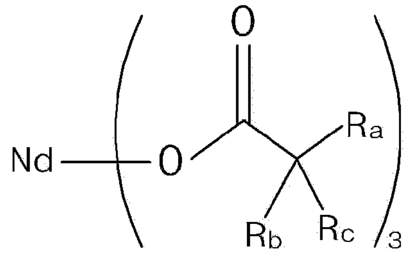

in Formula 1,

$R_a$ to $R_c$ are each independently hydrogen or an alkyl group of 1 to 12 carbon atoms, where $R_a$ to $R_c$ are not hydrogen at the same time.

**7.** The method for preparing a modified conjugated diene-based polymer according to claim 1, wherein the neodymium compound is one or more selected from the group consisting of $Nd(neodecanoate)_3$, $Nd(2\text{-ethylhexanoate})_3$, $Nd(2,2\text{-dimethyl decanoate})_3$, $Nd(2,2\text{-diethyl decanoate})_3$, $Nd(2,2\text{-dipropyl decanoate})_3$, $Nd(2,2\text{-dibutyl decanoate})_3$, $Nd(2,2\text{-dihexyl decanoate})_3$, $Nd(2,2\text{-dioctyl decanoate})_3$, $Nd(2\text{-ethyl-2-propyl decanoate})_3$, $Nd(2\text{-ethyl-2-butyl decanoate})_3$, $Nd(2\text{-ethyl-2-hexyl decanoate})_3$, $Nd(2\text{-propyl-2-butyl decanoate})_3$, $Nd(2\text{-propyl-2-hexyl decanoate})_3$, $Nd(2\text{-propyl-2-isopropyl decanoate})_3$, $Nd(2\text{-butyl-2-hexyl decanoate})_3$, $Nd(2\text{-hexyl-2-octyl decanoate})_3$, $Nd(2,2\text{-diethyl octanoate})_3$, $Nd(2,2\text{-dipropyl octanoate})_3$, $Nd(2,2\text{-dibutyl octanoate})_3$, $Nd(2,2\text{-dihexyl octanoate})_3$, $Nd(2\text{-ethyl-2-propyl octanoate})_3$, $Nd(2\text{-ethyl-2-hexyl octanoate})_3$, $Nd(2,2\text{-diethyl nonanoate})_3$, $Nd(2,2\text{-dipropyl nonanoate})_3$, $Nd(2,2\text{-dibutyl nonanoate})_3$, $Nd(2,2\text{-dihexyl nonanoate})_3$, $Nd(2\text{-ethyl-2-propyl nonanoate})_3$, and $Nd(2\text{-ethyl-2-hexyl nonanoate})_3$.

**8.** The method for preparing a modified conjugated diene-based polymer according to claim 1, wherein the first alkylating agent is 60 to 150 mol based on 1 mol of the neodymium compound.

**9.** The method for preparing a modified conjugated diene-based polymer according to claim 1, wherein the first alkylating agent is one or more selected from the group consisting of methylaluminoxane, modified methylaluminoxane, ethylaluminoxane, n-propylaluminoxane, isopropylaluminoxane, butylaluminoxane, isobutylaluminoxane, n-pentylaluminoxane, neopentylaluminoxane, n-hexylaluminoxane, n-octylaluminoxane, 2-ethylhexylaluminoxane, cylcohexylaluminoxane, 1-methylcyclopentylaluminoxane, phenylaluminoxane, and 2,6-dimethylphenylaluminoxane.

**10.** The method for preparing a modified conjugated diene-based polymer according to claim 1, wherein the first alkylating agent is methylaluminoxane, modified methylaluminoxane or a mixture thereof.

**11.** The method for preparing a modified conjugated diene-based polymer according to claim 1, wherein the second alkylating agent is one or more selected from the group consisting of diethylaluminum hydride, di-n-propylaluminum hydride, diisopropylaluminum hydride, di-n-butylaluminum hydride, diisobutylaluminum hydride, di-n-octylaluminum

hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride, ethylaluminum dihydride, n-propylaluminum dihydride, isopropylaluminum dihydride, n-butylaluminum dihydride, isobutylaluminum dihydride, and n-octylaluminum dihydride.

**12.** The method for preparing a modified conjugated diene-based polymer according to claim 1, wherein the second alkylating agent is one or more selected from the group consisting of diethylaluminum hydride, di-n-propylaluminum hydride, diisopropylaluminum hydride, di-n-butylaluminum hydride and diisobutylaluminum hydride.

**13.** The method for preparing a modified conjugated diene-based polymer according to claim 1, wherein the halide is 2.1 to 3.0 mol based on 1 mol of the neodymium compound.

**14.** The method for preparing a modified conjugated diene-based polymer according to claim 1, wherein the halide is one or more selected from the group consisting of elemental halogen, an interhalogen compound, hydrogen halide, an organic halide, a non-metal halide, a metal halide, and an organic metal halide.

**15.** The method for preparing a modified conjugated diene-based polymer according to claim 1, wherein the halide is one or more selected from the group consisting of dimethylaluminum chloride, diethylaluminum chloride, methylaluminum dichloride, ethylaluminum dichloride, methylaluminum sesquichloride, ethylaluminum sesquichloride and isobutylaluminum sesquichloride.

## Patentansprüche

**1.** Verfahren zur Herstellung eines modifizierten Polymers auf Basis von konjugiertem Dien, wobei das Verfahren umfasst:

Polymerisieren eines Monomers auf Basis von konjugiertem Dien in Gegenwart einer Katalysatorzusammensetzung, die eine Neodymverbindung, ein erstes Alkylierungsmittel, ein zweites Alkylierungsmittel und ein Halogenid umfasst, in einem Kohlenwasserstofflösungsmittel, um ein aktives Polymer herzustellen; und
Umsetzen oder Koppeln des aktiven Polymers mit einem Modifizierungsmittel,
wobei ein Molverhältnis der Neodymverbindung und des zweiten Alkylierungsmittels 1 : 20 bis 1 : 35 beträgt, und das Polymerisieren bei einer Temperatur von 30 bis 65 °C durchgeführt wird,
wobei das Modifizierungsmittel Ethyl-1-(trimethylsilyl)piperidin-4-carboxylat ist,
wobei das erste Alkylierungsmittel Aluminoxan ist, und
wobei das zweite Alkylierungsmittel Dihydrocarbylaluminiumhydrid oder Hydrocarbylaluminiumdihydrid ist.

**2.** Verfahren zur Herstellung eines modifizierten Polymers auf Basis von konjugiertem Dien nach Anspruch 1, wobei das Polymerisieren bei einer Temperatur von 40 bis 65 °C für 15 Minuten bis 3 Stunden durchgeführt wird.

**3.** Verfahren zur Herstellung eines modifizierten Polymers auf Basis von konjugiertem Dien nach Anspruch 1, ferner umfassend: Mischen der Neodymverbindung, des ersten Alkylierungsmittels, des zweiten Alkylierungsmittels und des Halogenids bei -30 bis -20 °C und Stehenlassen der so erhaltenen Mischung bei -30 bis -20 °C für 24 bis 36 Stunden, um die Katalysatorzusammensetzung herzustellen, bevor das aktive Polymer hergestellt wird.

**4.** Verfahren zur Herstellung eines modifizierten Polymers auf Basis von konjugiertem Dien nach Anspruch 1, wobei ein Molverhältnis der Neodymverbindung, des ersten Alkylierungsmittels, des zweiten Alkylierungsmittels und des Halogenids, die in der Katalysatorzusammensetzung enthalten sind, 1 : (50 bis 200) : (20 bis 35) : (2 bis 5) beträgt.

**5.** Verfahren zur Herstellung eines modifizierten Polymers auf Basis von konjugiertem Dien nach Anspruch 1, wobei die Neodymverbindung 0,01 bis 0,50 mmol, bezogen auf 100 g des Monomers auf Basis von konjugiertem Dien, beträgt.

**6.** Verfahren zur Herstellung eines modifizierten Polymers auf Basis von konjugiertem Dien nach Anspruch 1, wobei die Neodymverbindung eine Verbindung ist, die durch die folgende Formel 1 dargestellt wird:

[Formel 1]

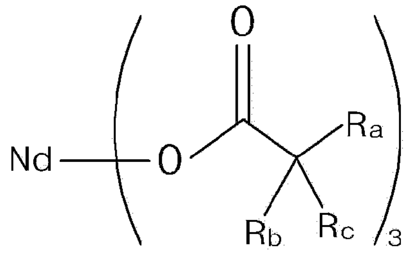

wobei in Formel 1

$R_a$ bis $R_c$ jeweils unabhängig Wasserstoff oder eine Alkylgruppe mit 1 bis 12 Kohlenstoffatomen sind, wobei $R_a$ bis $R_c$ nicht gleichzeitig Wasserstoff sind.

**7.** Verfahren zur Herstellung eines modifizierten Polymers auf Basis von konjugiertem Dien nach Anspruch 1, wobei die Neodymverbindung eine oder mehrere ist, ausgewählt aus der Gruppe, bestehend aus Nd(Neodecanoat)$_3$, Nd(2-Ethylhexanoat)$_3$, Nd(2,2-Dimethyldecanoat)$_3$, Nd(2,2-Diethyldecanoat)$_3$, Nd(2,2-Dipropyldecanoat)$_3$, Nd(2,2-Dibutyldecanoat)$_3$, Nd(2,2-Dihexyldecanoat)$_3$, Nd(2,2-Dioctyldecanoat)3, Nd(2-Ethyl-2-propyldecanoat)3, Nd(2-Ethyl-2-butyldecanoat)3, Nd(2-Ethyl-2-hexyldecanoat)3, Nd(2-Propyl-2-butyldecanoat)3, Nd(2-Propyl-2-hexyldecanoat)3, Nd(2-Propyl-2-isopropyldecanoat)3, Nd(2-Butyl-2-hexyldecanoat)3, Nd(2-Hexyl-2-octyldecanoat)3, Nd(2,2-Diethyloctanoat)$_3$, Nd(2,2-Dipropyloctanoat)$_3$, Nd(2,2-Dibutyloctanoat)3, Nd(2,2-Dihexyloctanoat)3, Nd(2-Ethyl-2-propyloctanoat)3, Nd(2-Ethyl-2-hexyloctanoat)3, Nd(2,2-Diethylnonanoat)3, Nd(2,2-Dipropylnonanoat)$_3$, Nd(2,2-Dibutylnonanoat)$_3$, Nd(2,2-Dihexylnonanoat)$_3$, Nd(2-Ethyl-2-propylnonanoat)3 und Nd(2-Ethyl-2-hexylnonanoat)$_3$.

**8.** Verfahren zur Herstellung eines modifizierten Polymers auf Basis von konjugiertem Dien nach Anspruch 1, wobei das erste Alkylierungsmittel 60 bis 150 mol, bezogen auf 1 mol der Neodymverbindung, beträgt.

**9.** Verfahren zur Herstellung eines modifizierten Polymers auf Basis von konjugiertem Dien nach Anspruch 1, wobei das erste Alkylierungsmittel eines oder mehrere ist, ausgewählt aus der Gruppe, bestehend aus Methylaluminoxan, modifiziertem Methylaluminoxan, Ethylaluminoxan, n-Propylaluminoxan, Isopropylaluminoxan, Butylaluminoxan, Isobutylaluminoxan, n-Pentylaluminoxan, Neopentylaluminoxan, n-Hexylaluminoxan, n-Octylaluminoxan, 2-Ethylhexylaluminoxan, Cyclohexylaluminoxan, 1-Methylcyclopentylaluminoxan, Phenylaluminoxan und 2,6-Dimethylphenylaluminoxan.

**10.** Verfahren zur Herstellung eines modifizierten Polymers auf Basis von konjugiertem Dien nach Anspruch 1, wobei das erste Alkylierungsmittel Methylaluminoxan, modifiziertes Methylaluminoxan oder eine Mischung davon ist.

**11.** Verfahren zur Herstellung eines modifizierten Polymers auf Basis von konjugiertem Dien nach Anspruch 1, wobei das zweite Alkylierungsmittel eines oder mehrere ist, ausgewählt aus der Gruppe, bestehend aus Diethylaluminiumhydrid, Di-n-propylaluminiumhydrid, Diisopropylaluminiumhydrid, Di-n-butylaluminiumhydrid, Diisobutylaluminiumhydrid, Di-n-octylaluminiumhydrid, Diphenylaluminiumhydrid, Di-p-tolylaluminiumhydrid, Dibenzylaluminiumhydrid, Phenylethylaluminiumhydrid, Phenyl-n-propylaluminiumhydrid, Phenylisopropylaluminiumhydrid, Phenyl-n-butylaluminiumhydrid, Phenylisobutylaluminiumhydrid, Phenyl-n-octylaluminiumhydrid, p-Tolylethylaluminiumhydrid, p-Tolyl-n-propylaluminiumhydrid, p-Tolylisopropylaluminiumhydrid, p-Tolyl-n-butylaluminiumhydrid, p-Tolylisobutylaluminiumhydrid, p-Tolyl-n-octylaluminiumhydrid, Benzylethylaluminiumhydrid, Benzyl-n-propylaluminiumhydrid, Benzylisopropylaluminiumhydrid, Benzyl-n-butylaluminiumhydrid, Benzylisobutylaluminiumhydrid und Benzyl-n-octylaluminiumhydrid, Ethylaluminiumdihydrid, n-Propylaluminiumdihydrid, Isopropylaluminiumdihydrid, n-Butylaluminiumdihydrid, Isobutylaluminiumdihydrid und n-Octylaluminiumdihydrid.

**12.** Verfahren zur Herstellung eines modifizierten Polymers auf Basis von konjugiertem Dien nach Anspruch 1, wobei das zweite Alkylierungsmittel eines oder mehrere ist, ausgewählt aus der Gruppe, bestehend aus Diethylaluminiumhydrid, Di-n-propylaluminiumhydrid, Diisopropylaluminiumhydrid, Di-n-butylaluminiumhydrid und Diisobutylaluminiumhydrid.

13. Verfahren zur Herstellung eines modifizierten Polymers auf Basis von konjugiertem Dien nach Anspruch 1, wobei das Halogenid 2,1 bis 3,0 mol, bezogen auf 1 mol der Neodymverbindung, beträgt.

14. Verfahren zur Herstellung eines modifizierten Polymers auf Basis von konjugiertem Dien nach Anspruch 1, wobei das Halogenid eines oder mehrere ist, ausgewählt aus der Gruppe, bestehend aus elementarem Halogen, einer Interhalogenverbindung, Wasserstoffhalogenid, einem organischen Halogenid, einem Nichtmetallhalogenid, einem Metallhalogenid und einem organischen Metallhalogenid.

15. Verfahren zur Herstellung eines modifizierten Polymers auf Basis von konjugiertem Dien nach Anspruch 1, wobei das Halogenid eines oder mehrere ist, ausgewählt aus der Gruppe, bestehend aus Dimethylaluminiumchlorid, Diethylaluminiumchlorid, Methylaluminiumdichlorid, Ethylaluminiumdichlorid, Methylaluminiumsesquichlorid, Ethylaluminiumsesquichlorid und Isobutylaluminiumsesquichlorid.

## Revendications

1. Méthode de préparation d'un polymère modifié à base de diène conjugué, la méthode comprenant:

   la polymérisation d'un monomère à base de diène conjugué en présence d'une composition catalytique comprenant un composé de néodyme, un premier agent alkylant, un deuxième agent alkylant et un halogénure dans un solvant hydrocarboné pour préparer un polymère actif; et
   la réaction ou le couplage du polymère actif avec un modificateur,
   le rapport molaire entre le composé de néodyme et le deuxième agent alkylant est compris entre 1:20 et 1:35, et
   la polymérisation est effectuée à une température de 30 à 65 °C,
   le modificateur est l' de 1-(triméthylsilyl)pipéridine-4-carboxylate d'éthyle,
   le premier agent alkylant est l'aluminoxane, et
   le deuxième agent alkylant est un hydrure de dihydrocarbylaluminium ou un dihydrure d'hydrocarbylaluminium.

2. Méthode de préparation d'un polymère modifié à base de diène conjugué selon la revendication 1, dans laquelle la polymérisation est effectuée à une température comprise entre 40 et 65 °C pendant 15 minutes à 3 heures.

3. Méthode de préparation d'un polymère modifié à base de diène conjugué selon la revendication 1, comprenant en outre: le mélange du composé de néodyme, du premier agent alkylant, du deuxième agent alkylant et de l'halogénure à une température comprise entre -30 et -20 °C et le maintien du mélange ainsi obtenu à une température comprise entre -30 et -20 °C pendant 24 à 36 heures pour préparer la composition catalytique, avant de préparer le polymère actif.

4. Méthode de préparation d'un polymère modifié à base de diène conjugué selon la revendication 1, dans laquelle le rapport molaire du composé de néodyme, du premier agent alkylant, du deuxième agent alkylant et de l'halogénure compris dans la composition catalytique est de 1 : (50 à 200) : (20 à 35) : (2 à 5).

5. Méthode de préparation d'un polymère modifié à base de diène conjugué selon la revendication 1, dans laquelle le composé de néodyme est de 0,01 à 0,50 mmol pour 100 g de monomère à base de diène conjugué.

6. Méthode de préparation d'un polymère modifié à base de diène conjugué selon la revendication 1, dans laquelle le composé de néodyme est un composé représenté par la formule 1 suivante:

[Formule 1]

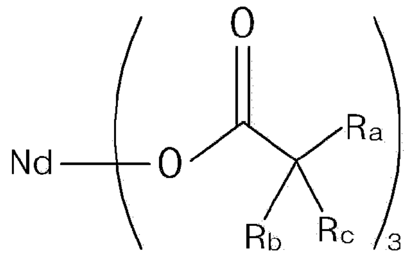

dans la formule 1,

$R_a$ à $R_c$ représentent chacun indépendamment un atome d'hydrogène ou un groupe alkyle de 1 à 12 atomes de carbone,
où $R_a$ à $R_c$ ne sont pas simultanément de l'hydrogène.

**7.** Méthode de préparation d'un polymère modifié à base de diène conjugué selon la revendication 1, dans laquelle le composé de néodyme est un ou plusieurs composés choisis dans le groupe constitué par le Nd(néodécanoate)$_3$, le Nd(2-éthylhexanoate)$_3$ , le Nd(2,2-diméthyl décanoate)$_3$, le Nd(2,2-diéthyl décanoate)$_3$, Nd(2,2-dipropyl décanoate)$_3$, Nd(2,2-dibutyl décanoate)$_3$, Nd(2,2-dihexyl décanoate)$_3$, Nd(2,2-dioctyl décanoate)$_3$ , Nd(2-éthyl-2-propyl décanoate)$_3$ , Nd(2-éthyl-2-butyl décanoate)$_3$ , Nd(2-éthyl-2-hexyl décanoate)$_3$, Nd(2-propyl-2-butyl décanoate)$_3$, Nd(2-propyl-2-hexyl décanoate)$_3$, Nd(2-propyl-2-isopropyl décanoate)$_3$, Nd(2-butyl-2-hexyl décanoate)$_3$, Nd(2-hexyl-2-octyl décanoate)$_3$, Nd(2,2-diéthyl octanoate)$_3$, Nd(octanoate de 2,2-dipropyle)$_3$, Nd(octanoate de 2,2-dibutyle)$_3$, Nd(octanoate de 2,2-dihexyle)$_3$, Nd(octanoate de 2-éthyl-2-propyle)$_3$, Nd(2-éthyl-2-hexyl octanoate)$_3$, Nd(2,2-diéthyl nonanoate)$_3$, Nd(2,2-dipropyl nonanoate)$_3$, Nd(2,2-dibutyl nonanoate)$_3$ , Nd(2,2-dihexyl nonanoate)$_3$, Nd(2-éthyl-2-propyl nonanoate)$_3$, et Nd(2-éthyl-2-hexyl nonanoate)$_3$.

**8.** Méthode de préparation d'un polymère modifié à base de diène conjugué selon la revendication 1, dans laquelle le premier agent alkylant est présent en une quantité de 60 à 150 moles pour 1 mole du composé de néodyme.

**9.** Méthode de préparation d'un polymère modifié à base de diène conjugué selon la revendication 1, dans laquelle le premier agent alkylant est un ou plusieurs agents choisis dans le groupe constitué par le méthylaluminoxane, le méthylaluminoxane modifié, l'éthylaluminoxane, le n-propylaluminoxane, l'isopropylaluminoxane, l'e butylaluminoxane, l'isobutylaluminoxane, le n-pentylaluminoxane, le néopentylaluminoxane, n-hexylaluminoxane, n-octylaluminoxane, 2-éthylhexylaluminoxane, cyclohexylaluminoxane, 1-méthylcyclopentylaluminoxane, phénylaluminoxane et 2,6-diméthylphénylaluminoxane.

**10.** Méthode de préparation d'un polymère modifié à base de diène conjugué selon la revendication 1, dans laquelle le premier agent alkylant est le méthylaluminoxane, le méthylaluminoxane modifié ou un mélange de ceux-ci.

**11.** Méthode de préparation d'un polymère modifié à base de diène conjugué selon la revendication 1, dans laquelle le deuxième agent alkylant est un ou plusieurs agents choisis dans le groupe constitué par l'hydrure de diéthylaluminium, l'hydrure de di-n-propylaluminium, l'hydrure de diisopropylaluminium, l'hydrure de di-n-butylaluminium, l'hydrure de diisobutylaluminium, l'hydrure de di-n-octylaluminium, l'hydrure de diphénylaluminium, l'hydrure de di-p-tolylaluminium, l'hydrure de dibenzylaluminium, l'hydrure de phényléthylaluminium, l'hydrure de phényl-n-propylaluminium, l'hydrure de phénylisopropylaluminium, l'hydrure de phényl-n-butylaluminium, l'hydrure de phénylisobutylaluminium, l' hydrure de phényl-n-octylaluminium, hydrure de p-tolyléthylaluminium, hydrure de p-tolyl-n-propylaluminium, hydrure de p-tolylisopropylaluminium, hydrure de p-tolyl-n-butylaluminium, hydrure de p-tolylisobutylaluminium, hydrure de p-tolyl-n-octylaluminium, hydrure de benzyléthylaluminium, hydrure de benzyl-n-propylaluminium, hydrure de benzylisopropylaluminium, hydrure de benzyl-n-butylaluminium, hydrure de benzylisobutylaluminium et hydrure de benzyl-n-octylaluminium, dihydrure d'éthylaluminium, dihydrure de n-propylaluminium, dihydrure d'isopropyl , dihydrure de n-butylaluminium, dihydrure d'isobutylaluminium et dihydrure de n-octylaluminium.

**12.** Méthode de préparation d'un polymère modifié à base de diène conjugué selon la revendication 1, dans laquelle le

deuxième agent alkylant est un ou plusieurs agents choisis dans le groupe constitué par l'hydrure de diéthylaluminium, l'hydrure de di-n-propylaluminium, l'hydrure de diisopropylaluminium, l'hydrure de di-n-butylaluminium et l'hydrure de diisobutylaluminium.

**13.** Méthode de préparation d'un polymère modifié à base de diène conjugué selon la revendication 1, dans laquelle l'halogénure est présent en une quantité de 2,1 à 3,0 moles pour 1 mole du composé de néodyme.

**14.** Méthode de préparation d'un polymère modifié à base de diène conjugué selon la revendication 1, dans laquelle l'halogénure est un ou plusieurs éléments choisis dans le groupe constitué par un halogène élémentaire, un composé interhalogéné, un halogénure d'hydrogène, un halogénure organique, un halogénure non métallique, un halogénure métallique et un halogénure métallique organique.

**15.** Méthode de préparation d'un polymère modifié à base de diène conjugué selon la revendication 1, dans laquelle l'halogénure est un ou plusieurs halogénures choisis dans le groupe constitué par le chlorure de diméthylaluminium, le chlorure de diéthylaluminium, le dichlorure de méthylaluminium, le dichlorure d'éthylaluminium, le sesquichlorure de méthylaluminium, le sesquichlorure d'éthylaluminium et le sesquichlorure d'isobutylaluminium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20170077614
- US 2017002112 A1
- US 2009099325 A1
- EP 3409718 A1
- KR 20190038344 A
- US 10316121 B2
- EP 1803740 A1
- EP 3409714 A1
- EP 3409717 A1
- WO 2019078459 A1
- EP 1099711 A2
- US 2018030173 A1
- KR 20070119092 A
- KR 20080063191 A